# EUROPÄISCHE PATENTSCHRIFT

(11) **EP 2 797 939 B1**
(45) Veröffentlichungstag und Bekanntmachung des Hinweises auf die Patenterteilung: **31.10.2018**
(21) Anmeldenummer: 12818896.8
(22) Anmeldetag: 28.12.2012
(51) Int. Cl.: C07F 9/6574

(54) **VERFAHREN ZUR REINIGUNG VON ORGANISCHEN DIPHOSPHITVERBINDUNGEN**
METHOD FOR PURIFYING ORGANIC DIPHOSPHITE COMPOUNDS
PROCÉDÉ D'ÉPURATION DE COMPOSÉS DIPHOSPHITE ORGANIQUES

(30) Priorität: 30.12.2011 EP 11196183
(43) Veröffentlichungstag der Anmeldung: 05.11.2014
(73) Patentinhaber: BASF SE, 67056 Ludwigshafen am Rhein (DE)
(72) Erfinder: BERENS, Ulrich, 79589 Binzen (DE); GANZ, Holger, 67067 Ludwigshafen (DE); WINDLIN, Franz, Niklaus, 69120 Heidelberg (DE); AL-AKHDAR, Walid, CH-4104 Oberwil (CH)
(74) Vertreter: BASF IP Association
(86) Internationale Anmeldenummer: PCT/EP2012/077018
(87) Internationale Veröffentlichungsnummer: WO 2013/098368

(56) Entgegenhaltungen:
- WO-A1-2012/095255
- ANNEMIEK VAN ROOY ET AL: "Bulky Diphosphite-Modified Rhodium Catalysts: Hydroformylation and Characterization", ORGANOMETALLICS, ACS, WASHINGTON, DC, US, Bd. 15, 23. Februar 1996 (1996-02-23), Seiten 835-847, XP007911079, ISSN: 0276-7333, DOI: 10.1021/OM950549K
- KATHRIN JUNGE: "Synthesis and catalytic application of novel binaphthyl-derived phosphorous ligands", ARKIVOC, Bd. 2007, Nr. 5, 1. Januar 2006 (2006-01-01), XP055057476, ISSN: 1551-7004, DOI: 10.3998/ark.5550190.0008.506
- MING YAN ET AL: "Enantioselective conjugate addition of diethylzinc to enones catalyzed by a copper complex of chiral aryl diphosphite", CHEMICAL COMMUNICATIONS, Nr. 1, 1. Januar 1999 (1999-01-01), Seiten 11-12, XP055057467, ISSN: 1359-7345, DOI: 10.1039/a807997h
- YAN M ET AL: "Asymmetric hydrocyanation of olefins catalyzed by chiral diphosphite-nickel complexes", TETRAHEDRON ASYMMETRY, PERGAMON PRESS LTD, OXFORD, GB, Bd. 11, Nr. 4, 1. März 2000 (2000-03-01), Seiten 845-849, XP004192896, ISSN: 0957-4166, DOI: 10.1016/S0957-4166(00)00026-4
- LUDWIG ANSCHÜTZ ET AL: "Phosphorigsäureester des 3.4-Dihydroxy-toluols und des 2.2'-Dihydroxy-biphenyls", CHEMISCHE BERICHTE, Bd. 89, Nr. 5, 1. Mai 1956 (1956-05-01), Seiten 1119-1123, XP055057449, ISSN: 0009-2940, DOI: 10.1002/cber.19560890507

## Beschreibung

### HINTERGRUND DER ERFINDUNG

Die vorliegende Erfindung betrifft ein Verfahren zur Reinigung von organischen Diphosphitverbindungen.

### STAND DER TECHNIK

Organische Diphosphitverbindungen haben äußerst weite Verbreitung gefunden, beispielsweise als Chelatliganden in der homogenen Katalyse, aber auch als Flammschutzmittel, UV-Stabilisatoren, etc. Bestimmte Rhodiumkomplexe mit organischen Diphosphitverbindungen haben sich als Katalysatoren für die Hydroformylierung von Olefinen bewährt, da sie einerseits eine hohe katalytische Aktivität aufweisen und andererseits überwiegend zu linearen Aldehyden führen, die für viele Anwendungen bevorzugt sind. Organische Diphosphitverbindungen eignen sich weiterhin als Liganden für Übergangsmetallkomplexkatalysatoren zur Hydrocyanierung, Hydrierung, Carbonylierung, Hydroacylierung, Hydroamidierung, Hydroveresterung, Hydrosilylierung, Hydroborierung, Alkoholyse, Isomerisierung, allylische Alkylierung oder Hydroalkylierung.

Derartige Diphosphitverbindungen, ihre Herstellung und ihr Einsatz als Liganden in einem Hydroformylierungsverfahren sind z. B. in der EP 0 214 622 A2, US 4,668,651, US 4,748,261, US 4,769,498, US 4,885,401, US 5,235,113, US 5,391,801, US 5,663,403, US 5,728,861 und US 6,172,267 beschrieben. In der US 6,127,567 ist auch der Einsatz in einem Hydrocyanierungsverfahren beschrieben.

Die Herstellung von organischen Diphosphiten der allgemeinen Formel (A) erfolgt üblicherweise durch ein Verfahren, das die folgenden Schritte umfasst:
a) Umsetzen einer Verbindung der Formel (A1) (= erstes aromatisches Diol) mit Phosphortrichlorid unter Erhalt des Phosphormonochloridits (A2) 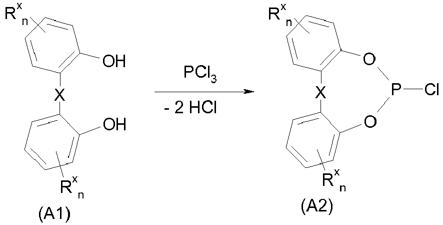
b) Umsetzen des Phosphormonochloridits (A2) mit einer Verbindung der Formel (A3) (= zweites aromatisches Diol) unter Erhalt des Chelatdiphosphits (A)

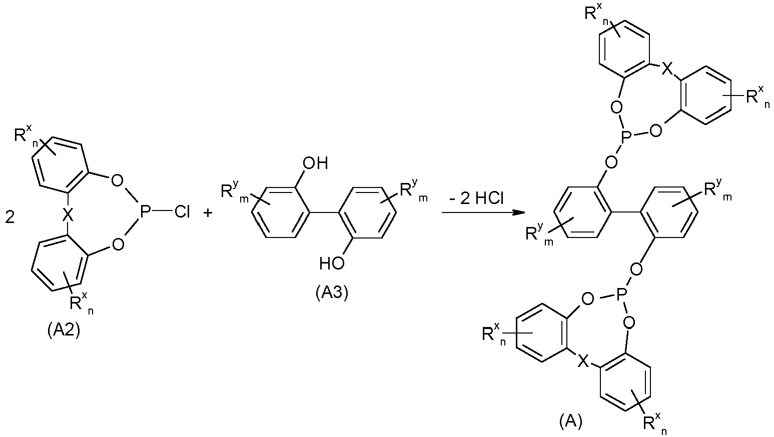

Die von dem ersten aromatischen Diol (A1) abgeleiteten Gruppen der organischen Diphosphite werden im Folgenden auch als "Seitenflügel" bezeichnet.

Die Herstellung von Diphosphiten, bei denen wenigstens eines der Phosphoratome nicht Teil eines Heterocyclus ist, erfolgt analog, indem man im Schritt a) PCl₃ mit zwei Moläquivalenten eines entsprechenden Monoalkohols anstelle eines Moläquivalents des ersten aromatischen Diols (A1) umsetzt. Zur Herstellung von Diphosphiten, bei denen die beiden Phosphoratome miteinander durch andere Gruppen verbrückt sind, können anstelle des Rückgratdiols (A3) alternativ andere Diole eingesetzt werden.

Eine Möglichkeit, die bei der Kondensationsreaktion freiwerdenden Halogenwasserstoffe zu entfernen, ist der Einsatz einer zumindest stöchiometrischen Menge Base, wobei vielfach Stickstoffbasen zum Einsatz kommen. Die Abtrennung der resultierenden Säuresalze ist jedoch vielfach aufwendig, und oftmals lassen sich die Salze nicht sinnvoll recyclen und müssen entsorgt werden, was mit zusätzlichen Kosten verbunden ist.

Die WO 2003/062171 und die WO 2003/062251 beschreiben ein Verfahren zur Abtrennung von Säuren aus Reaktionsgemischen mittels einer Hilfsbase, die ein Salz mit der Säure bildet, das bei Temperaturen flüssig ist, bei denen das Wertprodukt während der Abtrennung des Flüssigsalzes nicht signifikant zersetzt wird und das Salz der Hilfsbase mit dem Wertprodukt oder der Lösung des Wertproduktes in einem geeigneten Lösungsmittel zwei nicht mischbare flüssige Phasen ausbildet. Mit anderen Worten, verhalten sich die Säuresalze der Hilfsbase wie ionische Flüssigkeiten, die mit dem eigentlichen Reaktionslösungsmittel im Wesentlichen nicht mischbar sind. Bevorzugte Hilfsbasen dieses Typs sind 1-Methylimidazol, 1-n-Butylimidazol, 2-Methylpyridin und 2-Ethylpyridin. Die in der WO 2003/062171 und WO 2003/062251 beschriebenen Verfahren eignen sich unter Anderem für Phosphorylierungsreaktionen, wie die zuvor beschriebene Synthese von Phosphormonochloriditen sowie deren Umsetzung mit einem aromatischen Diol unter Erhalt einer Diphosphitverbindung.

In der Regel müssen organische Diphosphitverbindungen im Anschluss an die Synthese einer Reinigung unterzogen werden, um vor ihrem Einsatz in einem Katalyseverfahren störende Verunreinigungen zu entfernen. Potentielle Verunreinigungen können unabhängig vom eingesetzten Syntheseverfahren sein, z. B. für diese Stoffklasse typische Abbau- oder sonstige Folgeprodukte, oder sich im Verlauf der Synthese bilden. Problematisch sind zum einen Verunreinigungen, die mit Übergangsmetallen, wie Rhodium, Komplexe bilden können, wie Acetonitril, und die somit potentiell Einfluss auf einen Einsatz der Diphosphitverbindungen als Katalysatoren haben. Dazu zählen auch z. B. sekundäre Organophosphite, auf die im Folgenden noch genauer eingegangen wird. Problematisch sind auch Verunreinigungen, die den Einsatz teurer Apparate erforderlich machen, wie z. B. die korrosiv wirkenden Halogenide, speziell Chlorid. Chloridionen sind zudem auch bekannte Katalysatorgifte für Rhodiumkomplexkatalysatoren.

Negative Auswirkungen von Verunreinigungen der organischen Diphosphitverbindungen können das Verfahren als solches betreffen, in dem sie als Liganden eingesetzt werden. So können Verunreinigungen, die als Katalysatorgifte wirken und/oder zu einem Abbau des Katalysators führen, sich negativ auf die Katalysatorstandzeit auswirken, was über die Zeit zu Betriebstörungen führen kann. Dies gilt insbesondere für den Einsatz der organischen Diphosphitverbindungen in einem kontinuierlichen Verfahren, in dem sich Verunreinigungen anreichern können. Negative Auswirkungen dieser Verunreinigungen können auch die in den jeweiligen Verfahren hergestellten Wertprodukte betreffen, indem sie sich negativ auf Produkteigenschaften, z. B. das Lagerungsverhalten, die Handhabbarkeit, den Geruch, die Farbe, die Haltbarkeit, etc. auswirken.

Die möglichst vollständige Entfernung von Verunreinigungen ist daher eine entscheidende Voraussetzung dafür, dass die organische Diphosphitverbindung erfolgreich in einem großtechnischen Verfahren eingesetzt werden kann.

Typische Verunreinigungen aus der Synthese von organischen Diphosphitverbindungen sind Reste der zum Abfangen des bei der Reaktion freiwerdenden Halogenwasserstoffs (in der Regel HCl) eingesetzten Base (in der Regel eine organische stickstoffhaltige Verbindung, z. B. ein Amin), die Säuresalze dieser Base sowie gegebenenfalls auch Reste des Halogenwasserstoffs. Typische Verunreinigungen aus der Synthese sind auch Katalysatoren, die die Umsetzung des Phosphortrihalogenids mit den aromatischen Alkoholen beschleunigen sollen. Auch wenn, wie in der WO 2003/062171 und der WO 2003/062251 beschrieben, als Base eine Verbindung eingesetzt wird, deren Säuresalze sich wie ionische Flüssigkeiten verhalten, die mit der Lösung der organischen Diphosphitverbindung in einem entsprechenden organischen Lösungsmittel, wie z. B. Toluol, im Wesentlichen nicht mischbar und somit leicht durch Phasentrennung abtrennbar sind, so ist in der Regel dennoch eine Reinigung der rohen Ligandlösung zwingend erforderlich.

Die DE 103 60 771 A1 lehrt, die Umsetzung von Phosphorhalogeniden mit organischen Verbindungen, die wenigstens eine OH-Gruppe aufweisen, in Gegenwart eines basischen lonenaustauscherharzes durchzuführen.

Die WO 2009/120210 und die zeitranggleiche US 2009/0247790 beschreiben ein Verfahren zur Herstellung von Phosphormonochloriditen, welche als Zwischenprodukt zur Einführung der Seitenflügel bei der Herstellung von Chelatdiphosphitverbindungen eingesetzt werden können. Danach erfolgt die Umsetzung von PCl₃ mit einem aromatischen Diol in einer Lösung, die weniger als 5 Mol% einer Stickstoffbase, bezogen auf Mole aromatisches Diol enthält, wobei gebildetes HCl aus der Reaktionslösung ausgetrieben wird und die Umsetzung unter im Wesentlichen isothermen Bedingungen erfolgt. Dies ist allerdings mit dem Nachteil verbunden, dass als Abgasstrom ausgetragenes Chlorwasserstoffgas in einem separaten Wäscher isoliert und entsorgt werden muss. Zudem wird mit dem Abgasstrom in der Regel auch Lösungsmittel ausgetragen. Die im Abgas mitgerissenen Anteile des Lösemittels erfordern aber zur Vermeidung von Emissionen deren Entfernung, die beispielsweise durch eine Verbrennung erfolgen kann und zusätzlichen Aufwand bedeutet.

Die WO 2010/042313 beschreibt ein Verfahren zur Herstellung von organischen Diphosphiten, bei dem die Umsetzung von PCl₃ mit dem die Seitenflügel bildenden ersten aromatischen Diol bereits in Gegenwart des die beiden Phosphoratome verbrückenden zweiten aromatischen Diols erfolgt und wobei die Reaktionspartner als Aufschlämmung in einem organischen Lösungsmittel miteinander in Kontakt gebracht werden und die Aufschlämmung weniger als 5 Mol% einer Stickstoffbase, bezogen auf Mole erstes Diol enthält und das organische Lösungsmittel nur ein geringes Lösungsvermögen für HCl aufweist. Diese Vorgehensweise führt zu einer Verringerung der bei der Kondensationsreaktion durch Abfangen des HCl mit Base gebildeten Säuresalze. Wiederum muss das als Abgasstrom ausgetragene Chlorwasserstoffgas in einem Wäscher isoliert und entsorgt werden.

Die WO 2010/052090 und WO 2010/052091 beschreiben Verfahren zur Herstellung von 6-Chlorodibenzo[d,f][1,3,2]-dioxaphosphepin, welches als Zwischenprodukt zur Einführung der Seitenflügel bei der Herstellung von Chelatdiphosphitverbindungen eingesetzt werden kann. Bei diesen Verfahren wird 2,2'-Dihydroxybiphenyl, welches in einem inerten Lösungsmittel suspendiert ist, in einen Reaktor zu einem Überschuss an Phosphortrichlorid unter Inertgas und Rühren gegeben, und die entstehenden Gase werden aus dem Reaktionsgemisch abgeleitet. Somit kann auf eine Basenzugabe bei der Reaktion verzichtet werden. Das als Abgasstrom ausgetragene Chlorwasserstoffgas muss abgefangen werden, wozu nach der Lehre dieses Dokuments ein separater Wäscher eingesetzt wird. Die im Abgas mitgerissenen Anteile des Lösemittels erfordern aber zur Vermeidung von Emissionen deren Entfernung, die beispielsweise durch eine Verbrennung erfolgen kann und zusätzlichen Aufwand bedeutet.

Weitere Verunreinigungen, die in der Lösung des rohen organischen Diphosphits enthalten sein können, sind auch dessen Monooxid (B1), Dioxid (B2) oder der durch unvollständigen Umsatz des Rückgrats entstandene hemi-Ligand (B3).

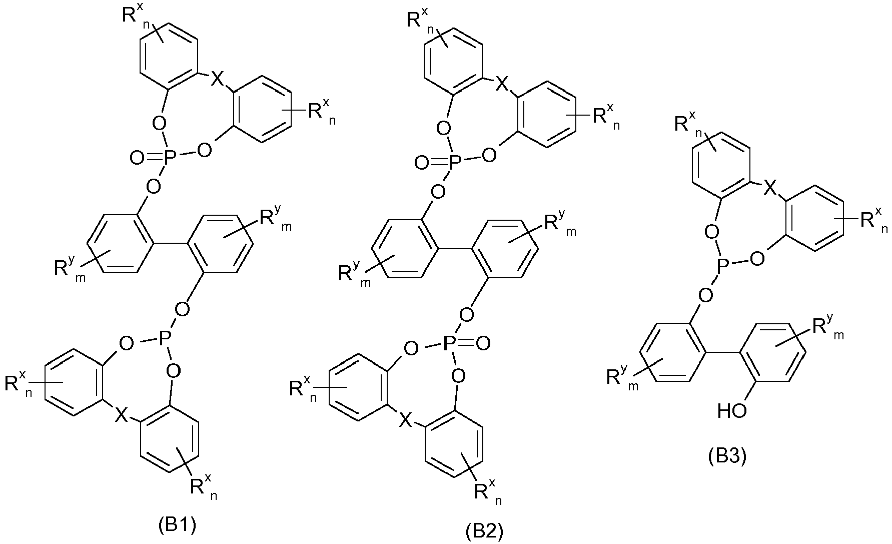

A. Christiansen et al. beschreiben in Chem. Eur. J. 2011, 17, 2120 die Bildung Heteroatom-substituierter sekundärer Phosphinoxide als Zersetzungsprodukte und Preliganden bei der Rhodium-katalysierten Hydroformylierung. Die entsprechenden, bei der Hydrolyse von tertiären Phosphiten resultierenden sekundären Organophosphite (C1) sind eine problematische Verunreinigung der rohen Chelatdiphosphitlösung, da sie als Säure wirken und im Verlauf der Zeit die säurelabilen Chelatdiphosphite zersetzen. Zudem wirken die Verbindungen (C1) durch Komplexierung von Übergangsmetallen, wie z. B. des Rhodiums, als Katalysatorgift und können bei Akkumulation über längere Zeiträume im Reaktor zur Abscheidung des Übergangsmetalls aus den homogenen Reaktionslösungen und zu Rhodiumverlusten führen. Da das Übergangsmetall dann nicht mehr für die Katalyse verfügbar ist, sind Störungen im Betrieb die Folge. Speziell bei der Hydroformylierung können die Verbindungen (C1) mit den gebildeten Aldehyden zu α-Hydroxyphosphonaten (C2) kondensieren. Sowohl die Verbindungen (C1) wie auch (C2) führen durch ihre Acidität zur hydrolytischen Zersetzung der Chelatphosphitliganden. Dieser Prozess verläuft zudem autokatalytisch, da bei der Hydrolyse der Chelatphosphitliganden weiteres (C1) nachgebildet wird.

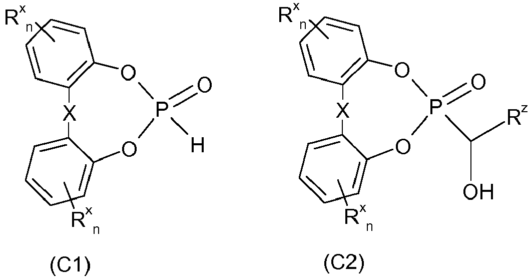

Die EP 0 285 136 A2 beschreibt ein Verfahren zur Reinigung von tertiären Organophosphiten durch Abtrennung von sekundären Organophosphiten, speziell auch von sekundären Organophosphiten mit einem vierfach koordinierten Phosphoratom wie in C1. In diesem Dokument wird auf das Problem hingewiesen, dass sich sekundäre Organophosphite von tertiären Organophosphiten durch einfache Umkristallisation im Allgemeinen nicht abtrennen lassen, da diese Verbindungen häufig cokristallisieren. Die EP 0 285 136 A2 lehrt daher, zu einer Lösung der sekundären und tertiären Organophosphite in einem organischen Lösungsmittel Wasser und eine Lewis-Base zuzugeben, die selektiv sekundäre Organophosphite in Salze primärer Organophosphite überführt, welche sich dann von den tertiären Organophosphiten abtrennen lassen. Geeignete Lewis-Basen sind NaOH und tertiäre Amine, z. B. Triethylamin.

Die CN 101684130A beschreibt ein Verfahren zur Herstellung von Chelatphosphiten, bei dem man
a.) das die Seitenflügel bildende Phosphormonochloridit in Dichlormethan löst,
b.) das die beiden Phosphoratome verbrückende aromatische Diol in Triethylamin oder einem Triethylamin//Dichlormethan-Gemisch löst,
c.) die Lösungen aus a.) und b.) mischt und bei -40 °C bis 20 °C umsetzt,
d.) die erhaltene Lösung 10 bis 20 h bei 20 bis 30 °C rührt, und
e.) zu der Lösung aus Schritt d.) vollentsalztes Wasser gibt, rührt, die Phasen separieren lässt, wobei die untere organische Phase das Phosphitprodukt enthält.

Die so erhaltenen Chelatphosphite werden unter Anderem durch einen Chloridionengehalt von weniger als 0,01 Gew.-% (100 ppm) charakterisiert.

Die US 2003/0100787 beschreibt ein Verfahren zur Herstellung von sterisch gehinderten Triarylmonophosphiten, ein möglicher Einsatz zur Herstellung von Diphosphiten ist hingegen nicht beschrieben. Nach den Herstellungsbeispielen erfolgt die Synthese dieser Monophosphite durch Umsetzung substituierter Phenole mit PCl₃ in Gegenwart von Pyridin und Methylenchlorid als Lösungsmittel. Nach der Reaktion wird das Methylenchlorid abdestilliert und das Monophosphit durch Zugabe von Isopropanol zur Kristallisation gebracht.

In Organometallics 1996, 15(2), 835 - 847 sind Studien der Rhodium-katalysierten Hydroformylierung von 1-Octen und Styrol mit sperrigen Chelatphosphitliganden beschrieben. Bei der Herstellung von Ligand (9) (6,6'-[[3,3',5,5'-tetrakis(1,1-dimethylethyl)-[1,1'-biphenyl]-2,2'-diyl]bis(oxy)]bis-dibenzo [d,f] [1,3,2]-dioxaphosphepin) wird beschrieben, den nach dem Abziehen des Lösungsmittels und von überschüssigem Pyridin erhaltenen Liganden zunächst durch Zugabe von Acetonitril zur Kristallisation zu bringen und ihn dann aus einem Toluol/Acetonitril-Gemisch umzukristallisieren.

Die US 5,312,996 beschreibt in Spalte 18, Zeile 60 ff. eine Ligandsynthese durch Umsetzung von 1,1'-Biphenyl-3,3'-di-tert.-butyl-5,5'-di-tert.-butoxy-2,2'-diol mit Biphenolchloridit in Toluol und in Gegenwart von Pyridin. Von dem erhaltenen Reaktionsprodukt wird das gebildete Pyridiniumchlorid abfiltriert. Die resultierende Lösung wird am Rotationsverdampfer eingeengt, bis sie eine sirupartige Konsistenz hat und dann das erhaltene Diphosphit durch Zugabe von Acetonitril ausgefällt. Der erhaltene Feststoff wird abfiltriert, mit Acetonitril gewaschen und getrocknet.

K. Junge et al. beschreiben in ARKIVOC, Band 2007, Nr. 5, Seiten 50 - 66, die Synthese von Phosphorliganden mit einem Binaphthyl-Rückgrat und deren Verwendung als Katalysatoren. Es ist beschrieben, dass Rohprodukt der Ligandsynthese einer Reinigung durch Umkristallisation zu unterziehen.

M. Yan et al. beschreiben in Chemical Communications, Nr. 1, 01. Januar 1999, Seiten 11 - 12 eine enantioselektive Addition, die durch einen Kupferkomplex eines chiralen Aryldiphosphits katalysiert wird. Auf Seite 11, Spalte 1, dritter Absatz, ist die Umkristallisation eines Diphosphits mit Binaphthyl-Rückgrat aus Methylenchlorid/Methanol beschrieben.

M. Yan et al. beschreiben in Tetrahedron Asymmetry, Band 11, Nr. 4 (2000), Seiten 845 - 849 eine asymmetrische Hydrocyanierung von Olefinen, die durch chirale Diphosphit-Nickel-Komplexe katalysiert wird. Im Absatz 3.1 auf Seite 848 ist die Umkristallisation eines Diphosphits mit Binaphthyl-Rückgrat aus Methylenchlorid/Methanol beschrieben.

Ludwig Anschütz et al. beschreiben in Chemische Berichte, Band 89, Nr. 5, 1956, Seiten 1119 - 1123 Phosphorigsäureester des 3,4-Dihydroxytoluols und des 2,2'-Dihydroxybiphenyls. Auf Seite 1123 dieses Dokuments ist die Herstellung eines organischen Diphosphits der Formel (VIII) beschrieben. Danach wird die Verbindung in heißem Benzol gelöst und kann durch Zufügen von Cyclohexan zur Kristallisation gebracht werden.

Der vorliegenden Erfindung liegt die Aufgabe zugrunde, ein einfaches und effektives Verfahren zur Reinigung von organischen Diphosphitverbindungen zur Verfügung zu stellen. Dabei soll die erhaltene Diphosphitverbindung eine Reinheit aufweisen, die einen Einsatz als Ligand in einem kontinuierlich durchgeführten großtechnischen Verfahren ermöglicht. Eine Verunreinigung mit Verbindungen aus dem Herstellungsverfahren, wie z. B. Acetonitril, die sich negativ auf einen Einsatz der organischen Diphosphite als Liganden für Katalysatoren für die homogene Katalyse auswirken, soll vermieden werden. Speziell soll auch der Gehalt an sekundären Organophosphiten möglichst gering sein. Bevorzugt soll die erhaltene organische Diphosphitverbindung in einer festen Form mit guten anwendungstechnischen Eigenschaften erhalten werden. Dazu zählen z. B. Kristalle, die so groß sind, dass sie sich gut durch Filtration abtrennen lassen und/oder die nur geringe Einschlüsse an Lösungsmittel (okkludiertes Lösungsmittel) mit darin enthaltenen Verunreinigungen aufweisen.

Überraschenderweise wurde nun gefunden, dass sich ein rohes organisches Diphosphit, das zumindest teilweise in einem organischen Lösungsmittel gelöst ist, durch Ausfällen mit einem Fällungsmittel (d. h. einem Lösungsmittel, in dem es schwer löslich ist) von den zuvor genannten Verunreinigungen effektiv reinigen lässt.

### ZUSAMMENFASSUNG DER ERFINDUNG

Ein erster Gegenstand der Erfindung ist ein Verfahren zur Reinigung von organischen Diphosphiten der allgemeinen Formel (I) 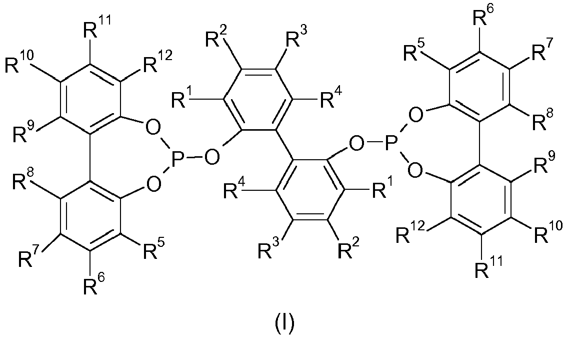 worin
R¹, R², R³ und R⁴ unabhängig voneinander für Wasserstoff, unsubstituiertes geradkettiges oder verzweigtes C₁-C₆-Alkyl, unsubstituiertes geradkettiges oder verzweigtes C₁-C₆-Alkoxy, C₆-C₁₀-Aryl, Chlor, Formyl, Acyl oder (C₁-C₆-Alkoxy)carbonyl stehen,
   wobei zwei benachbarte Reste R¹ bis R⁴ gemeinsam mit den Kohlenstoffatomen des Benzolkerns, an die sie gebunden sind, auch für ein kondensiertes Ringsystem mit einem weiteren Benzolring stehen können,
R⁵, R⁶, R⁷, R⁸, R⁹, R¹⁰, R¹¹ und R¹² unabhängig voneinander Wasserstoff, unsubstituiertes geradkettiges oder verzweigtes C₁-C₆-Alkyl, unsubstituiertes geradkettiges oder verzweigtes C₁-C₆-Alkoxy, C₆-C₁₀-Aryl, Chlor, Formyl, Acyl oder (C₁-C₆-Alkoxy)carbonyl stehen,
   wobei zwei benachbarte Reste R⁵ bis R¹² gemeinsam mit den Kohlenstoffatomen des Benzolkerns, an die sie gebunden sind, auch für ein kondensiertes Ringsystem mit einem weiteren Benzolring stehen können,
bei dem man ein rohes organisches Diphosphit der allgemeinen Formel (I), das zumindest teilweise in einem ersten Lösungsmittel (L1) gelöst ist, das ausgewählt ist unter (C₁-C₄-Alkyl)benzolen, durch Versetzen mit einem zweiten Lösungsmittel (L2), das ausgewählt ist unter Methanol, Ethanol, Ethylenglycoldimethylether und Mischungen davon, ausfällt.

In einer ersten Variante des Verfahrens erfolgt das Ausfällen des rohen organischen Diphosphits bevorzugt durch Auskristallisieren.

Eine erste Variante ist ein Verfahren, bei dem man
a) eine Lösung bereitstellt, die das rohe organische Diphosphit der allgemeinen Formel (I) und das erste Lösungsmittel (L1) enthält,
b1) das organische Diphosphit durch Abdestillieren eines Teils des ersten Lösungsmittels (L1) teilweise auskristallisiert und zur Vervollständigung der Kristallisation das zweite Lösungsmittel (L2) zugibt, und
c) das auskristallisierte organische Diphosphit von der flüssigen Phase abtrennt.

Bevorzugt wird in Schritt b1) das organische Diphosphit durch Abdestillieren eines Teils des ersten Lösungsmittels (L1) in der Hitze teilweise auskristallisiert.

Eine zweite Variante ist ein Verfahren, bei dem man
a) eine Lösung bereitstellt, die das rohe organische Diphosphit der allgemeinen Formel (I) und das erste Lösungsmittel (L1) enthält,
b2) die in Schritt a) bereitgestellte Lösung zu dem zweiten Lösungsmittel (L2) zugibt, wobei das organische Diphosphit zumindest teilweise ausfällt, und
c) das ausgefällte organische Diphosphit von der flüssigen Phase abtrennt.

In einer bevorzugten Ausführung wird in Schritt b2) die in Schritt a) bereitgestellte Lösung heiß zu dem zweiten Lösungsmittel (L2) gegeben.

In einer bevorzugten Ausführung wird das in Schritt c) erhaltene organische Diphosphit zur Aufarbeitung einer Wäsche mit einem flüssigen Waschmedium unterzogen (Schritt d)).

### BESCHREIBUNG DER ERFINDUNG

Das erfindungsgemäße Verfahren weist die folgenden Vorteile auf:
- Das Verfahren ist einfach und effektiv.
- Die erhaltenen organischen Diphosphite sind so rein, dass ein Einsatz als Ligand in einem kontinuierlich durchgeführten großtechnischen Verfahren ohne störende Auswirkungen möglich ist.
- Das erfindungsgemäße Reinigungsverfahren ermöglicht speziell eine deutliche Verringerung des Gehalts an sekundären Organophosphiten.
- Die erhaltenen Diphosphitverbindungen weisen keine nachweisbaren Mengen an Diolen der allgemeinen Formel (Aii) 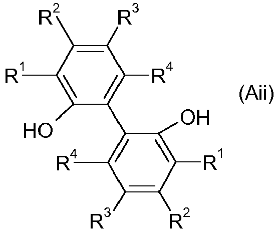 auf, die das Rückgrat der organischen Diphosphite der allgemeinen Formel (I) bilden. Die Diole (Aii) sind aufgrund ihrer relativ hohen Acidität und der damit verbundenen Gefahr einer Zerstörung der organischen Diphosphite unerwünscht.
- Die erhaltenen Diphosphitverbindungen weisen nur geringe Gehalte an Halogenidionen, speziell Chloridionen, auf.
- Die erhaltenen Diphosphitverbindungen weisen speziell keine nachweisbaren Mengen an sekundären Phosphiten C1 oder tertiären mono-Phosphiten D1 und/oder D2 auf 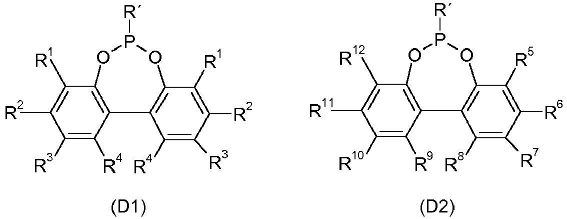 worin R' für Alkoxy, bevorzugt C₁-C₄-Alkoxy, insbesondere Methoxy, steht. Dies ist überraschenderweise auch dann der Fall, wenn als zweites Lösungsmittel (L2) ein C₁-C₄-Alkanol, insbesondere Methanol, eingesetzt wird.

Die zweite Variante des erfindungsgemäßen Verfahrens (umfassend die Schritte a), b2) und c)) ist besonders bevorzugt. Sie weist zusätzlich folgende Vorteile auf:
- Das organische Diphosphit fällt in Form feiner, sehr gut filtrierbarer Kristalle an.
- Das organische Diphosphit schließt nur geringe Mengen der Mutterlauge, d. h. Lösungsmittel L1, L2 und darin gelöste Verunreinigungen, ein. Nur zur Vermeidung von Missverständnissen wird darauf hingewiesen, dass Einschlüsse (Okklusionen) von Lösungsmittel keine Solvate sind, bei denen Lösungsmittel in das Kristallgitter eingebaut ist und die einen anderen Kristall bilden als die entsprechenden Nonsolvate.
- Eine weitere Reinigung durch Umkristallisieren ist nicht erforderlich.
- Das nach dem erfindungsgemäßen Verfahren erhaltene Produkt ist ein frei fließendes Pulver, das auch beim Lagern nicht zum Verbacken neigt und seine Rieselfähigkeit über einen längeren Zeitraum behält.

Unter einem rohen Diphosphit wird im Sinne der Erfindung eine Zusammensetzung des organischen Diphosphits der allgemeinen Formel (I) vor der Reinigung verstanden, wie sie im Allgemeinen bei dessen Synthese entsteht und die eine oder mehrere Verunreinigungen enthält, z. B. Nebenprodukte, Edukte, Katalysatoren und/oder andere Synthesehilfsmittel.

Solche Verunreinigungen können sich bei einem Einsatz der organischen Diphosphite (I) als Liganden in der homogenen Katalyse negativ auf die Aktivität, Selektivität und/oder Stabilität des Katalysators auswirken und/oder andere anwendungstechnische Probleme, z. B. Korrosionsprobleme, oder eine Kontamination des Produkts der katalysierten Reaktion, z. B. in Form von Verfärbungen, nach sich ziehen.

Im Rahmen der Erfindung ist das Versetzen des organischen Diphosphits der allgemeinen Formel (I), das in dem ersten Lösungsmittel (L1) gelöst ist, mit einem zweiten Lösungsmittel (L2) ganz allgemein nicht auf eine bestimmte Reihenfolge bei der Zugabe limitiert. Grundsätzlich kann die Lösung des organischen Diphosphits (I) in (L1) zu (L2) gegeben werden oder es kann (L2) zu der Lösung des organischen Diphosphits (I) in (L1) gegeben werden oder es können die beiden flüssigen Medien in einer ansonsten geeigneten Weise vereinigt werden.

Nach der zuvor beschriebenen zweiten Variante des erfindungsgemäßen Verfahrens wird jedoch eine Lösung, die das rohe organische Diphosphit der allgemeinen Formel (I) und das erste Lösungsmittel (L1) enthält, zu dem zweiten Lösungsmittel (L2) zugegeben.

Durch die Zugabe des in dem ersten Lösungsmittel (L1) gelösten rohen organischen Diphosphits zu dem zweiten Lösungsmittel (L2) wird eine an dem organischen Diphosphit angereicherte feste Phase und wenigstens eine an den Verunreinigungen des rohen organischen Diphoshits angereicherte flüssige Phase erhalten. Nach fest-flüssig-Phasentrennung wird ein gereinigtes Diphosphit erhalten, das gegenüber dem rohen Diphosphit weniger Verunreinigungen enthält.

Die Verunreinigungen können z. B. sein:
- basische Verbindungen, speziell die in dem Verfahren zur Herstellung des organischen Diphosphits zum Abfangen von Halogenwasserstoff eingesetzten Basen (in der Regel eine organische stickstoffhaltige Verbindung, z. B. ein Amin),
- Säuresalze der basischen Verbindungen,
- Halogenwasserstoffe und/oder deren Salze,
- Monooxide des organischen Diphosphits,
- Dioxide des organischen Diphosphits,
- sekundäre Organophosphite, wie sie z. B. bei der Hydrolyse des zur Einfügung der Seitenflügel eingesetzten Phosphorchloridits resultieren,
- von den zuvor genannten Verunreinigungen verschiedene Edukte und Zwischenprodukte aus dem Verfahren zur Herstellung des organischen Diphosphits,
- von den zuvor genannten Verunreinigungen verschiedene Komponenten, z. B. bei der Herstellung des organischen Diphosphits eingesetzte Katalysatoren, Additive und/oder daraus gebildete Nebenprodukte, etc.,
- Mischungen von wenigstens zwei der zuvor genannten Verunreinigungen.

Das nach dem erfindungsgemäßen Verfahren erhaltene gereinigte organische Diphosphit weist vorzugsweise eine Reinheit von wenigstens 95 %, besonders bevorzugt wenigstens 98 %, insbesondere wenigstens 99,5 %, auf.

Die Reinheit wird dabei im Sinne von "chemische Reinheit" verstanden und bezeichnet den Stoffmengenanteil des nach dem erfindungsgemäßen Verfahren erhaltenen organischen Diphosphits als auch der nach dem erfindungsgemäßen Verfahren erhaltenen Solvate des organischen Diphosphits zum gesamten, bei der Reinigung erhaltenen festen Stoffgemisch. D. h. nach dem erfindungsgemäßen Verfahren erhaltene feste organische Diphosphite, die Lösungsmittel in das Kristallgitter eingebaut enthalten (sogenannte Solvatkristalle), werden den reinen Verbindungen zugerechnet.

Das nach dem erfindungsgemäßen Verfahren erhaltene organische Diphosphit enthält sekundäre Organophosphite im Allgemeinen in einer Menge von höchstens 1 Gew.-%, besonders bevorzugt von höchstens 0,5 Gew.-%, insbesondere von höchstens 0,2 Gew.-%, bezogen auf das Gesamtgewicht des reinen, nach dem erfindungsgemäßen Verfahren erhaltenen organischen Diphosphits, einschließlich dessen Solvaten.

Das nach dem erfindungsgemäßen Verfahren erhaltene organische Diphosphit enthält stickstoffhaltige Verbindungen im Allgemeinen in einer Menge von höchstens 20 ppm, besonders bevorzugt von höchstens 10 ppm, bezogen auf das Gesamtgewicht des reinen organischen Diphosphits, einschließlich dessen Solvaten.

Das nach dem erfindungsgemäßen Verfahren erhaltene organische Diphosphit enthält Halogenide (speziell Chlorid) im Allgemeinen in einer Menge von höchstens 20 ppm, besonders bevorzugt von höchstens 10 ppm, bezogen auf das Gesamtgewicht des reinen, nach dem erfindungsgemäßen Verfahren erhaltenen organischen Diphosphits, einschließlich dessen Solvaten.

Das nach dem erfindungsgemäßen Verfahren erhaltene organische Diphosphit enthält keine im ³¹P-NMR nachweisbaren Mengen an Phosphiten D1 und/oder D2 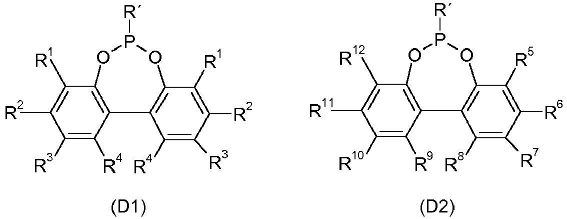 worin R' für Alkoxy, bevorzugt C₁-C₄-Alkoxy, insbesondere Methoxy, steht.

In der Regel können die nach dem erfindungsgemäßen Verfahren gereinigten organischen Diphosphite ohne eine weitere Aufarbeitung bzw. Reinigung, z. B. durch Umkristallisieren, als Liganden in der homogenen Katalyse eingesetzt werden.

Bevorzugt weist das erste Lösungsmittel (L1) einen Siedepunkt bei 1013 mbar von wenigstens 100 °C, besonders bevorzugt von wenigstens 110 °C, auf.

Als Lösungsmittel (L1) geeignete (C₁-C₄-Alkyl)benzole sind z. B. Toluol, Ethylbenzol, o-, m- oder p-Xylol, Cumol (Isopropylbenzol) und Mischungen davon.

Insbesondere wird als erstes Lösungsmittel (L1) Toluol eingesetzt.

Das zweite Lösungsmittel (L2) ist ausgewählt unter Methanol, Ethanol, Ethylenglycoldimethylether und Mischungen davon.

Überraschenderweise wird auch beim Einsatz von linearen C₁-C₄-Alkanolen als zweitem Lösungsmittel (L2) keine nennenswerte Alkoholyse der organischen Diphosphite (I) beobachtet.

Insbesondere wird als zweites Lösungsmittel (L2) Methanol eingesetzt.

Das erste Lösungsmittel (L1) und das zweite Lösungsmittel (L2) sind vorzugsweise vollständig miteinander mischbar. Wird ein erstes Lösungsmittel (L1) und ein zweites Lösungsmittel (L2) eingesetzt, die nicht vollständig miteinander mischbar sind, so erfolgt deren Einsatz vorzugsweise in einem Mengenverhältnis, das nicht in einer Mischungslücke liegt.

Durch Einsatz einer ausreichenden Menge des zweiten Lösungsmittels (L2) gelingt es, das zumindest teilweise in dem Lösungsmittel (L1) gelöste organische Diphosphit im Wesentlichen vollständig auszufällen. Mit den zuvor genannten Lösungsmitteln (L1) und (L2) wird dabei eine flüssige Mutterlauge erhalten, die die Hauptmenge der Verunreinigungen in gelöster Form enthält.

Die Zugabe der Lösung des rohen organischen Diphosphits (I) in dem ersten Lösungsmittel (L1) zu dem zweiten Lösungsmittel (L2) kann in einem einzigen Zugabeschritt oder portionsweise erfolgen. Gewünschtenfalls kann die Zugabe auch im Sinne einer fraktionierten Kristallisation erfolgen, wobei die dabei auftretenden Fraktionen jeweils vor der weiteren Zugabe von (L2) isoliert werden können. Das Gewichtsmengenverhältnis von erstem Lösungsmittel (L1) zu zweitem Lösungsmittel (L2) wird praktikablerweise so gewählt, dass das zu reinigende organische Diphosphit (I) nach vollständiger Zugabe des zweiten Lösungsmittels (L2) möglichst vollständig ausgefällt vorliegt.

Das Gewichtsmengenverhältnis von L1 zu L2 liegt vorzugsweise in einem Bereich von 1 : 99 bis 95 : 5, besonders bevorzugt 2 : 98 bis 90 : 10, insbesondere 5 : 95 bis 80 : 20.

In einer besonders bevorzugten Ausführungsform wird als Lösungsmittel (L1) Toluol und als Lösungsmittel (L2) Methanol eingesetzt. Das Gewichtsmengenverhältnis von L1 zu L2 liegt dann vorzugsweise in einem Bereich von 1 : 99 bis 75 : 25, besonders bevorzugt von 1 : 99 bis 50 : 50. Ein besonders bevorzugtes Gewichtsmengenverhältnis von Toluol (L1) zu Methanol (L2) liegt in einem Bereich von 35 : 65 bis 45 : 55.

Bevorzugt wird das ausgefällte organische Diphosphit von der flüssigen Phase abgetrennt und das abgetrennte organische Diphosphit einer Wäsche mit einem flüssigen Waschmedium unterzogen. Das organische Diphosphit kann einmal oder mehrmals nacheinander einer Behandlung mit einem Waschmedium unterzogen werden. Geeignete Waschmedien sind solche, in denen sich die organischen Diphosphite (I) nicht oder nur in geringen Mengen lösen und deren Verunreinigungen gut lösen. Bevorzugte Waschmedien sind die zuvor beschriebenen zweiten Lösungsmittel (L2). Bevorzugt wird als Waschmedium das auch zur Fällung eingesetzte zweite Lösungsmittel (L2) eingesetzt. Ein besonders bevorzugtes Waschmedium ist Methanol. In einer besonders bevorzugten Ausführung wird das organische Diphosphit zunächst einer ein- oder mehrfachen Wäsche mit Methanol und abschließend einer Wäsche mit Aceton zur Verdrängung des Methanols unterzogen.

Überraschenderweise wurde gefunden, dass es sich vorteilhaft auf die Stabilität des nach dem erfindungsgemäßen Verfahren gereinigten organischen Diphosphits auswirkt, wenn man dem Waschmedium eine Base zusetzt. Bei mehreren Waschschritten kann die Base in einem oder in mehreren der Waschschritte zugegeben werden. Dies gilt bei mehreren Waschschritten beispielsweise für das im letzten Waschschritt eingesetzte Waschmedium. Besonders bevorzugt wird die Base allen Waschschritten mit Methanol zugesetzt. In einer bevorzugten Ausführungsform wird daher das von der flüssigen Phase abgetrennte organische Diphosphit zunächst einer ein- oder mehrfachen Wäsche mit basischem Methanol und einer abschließenden Wäsche mit Aceton zur Verdrängung des Methanols und zur Verdrängung von Basenresten unterzogen.

Zweckmäßigerweise ist die Base in dem Waschmedium gelöst. Geeignete Basen sind z. B. Alkalimetallhydroxide, wie NaOH und KOH und Alkalimetallalkoholate, wie Natriummethanolat, Kaliummethanolat, Natrium-tert.-butylat, Kalium-tert.-butylat, Natrium-tert.-amylat und Kalium-tert.-amylat, etc.

Bevorzugt wird als Base ein Alkalimetallalkoholat, insbesondere Natriummethanolat, eingesetzt.

In einer besonders bevorzugten Ausführungsform wird als Waschmedium Methanol eingesetzt, dem als Base Natriummethanolat zugesetzt wurde.
Bevorzugt wird dem Waschmedium eine Base in einer Menge von 0,01 bis 10 Gew.-%, besonders bevorzugt 0,05 bis 5 Gew.-%, bezogen auf das Gesamtgewicht des Waschmediums, zugesetzt.
Durch den Einsatz einer Base als Zusatz zu dem Waschmedium wird das Potential zu einer nicht mehr kontrollierbaren Zersetzung des organischen Diphosphits bei einer Erwärmung, z. B. beim Trocknen bei Temperaturen oberhalb von 150 °C, signifikant verringert.
Bezüglich der Ausgestaltung der Wäsche mit dem Waschmedium wird auf die folgenden Angaben unter Schritt d) in vollem Umfang Bezug genommen.

Bevorzugt ist das zur Reinigung eingesetzte organische Diphosphit ausgewählt unter Diphosphitverbindungen, wie sie z. B. in der EP 0 214 622 A2, US 4,668,651,
US 4,769,498, US 5,663,403, US 5,728,861 und US 6,172,267 beschrieben sind. Das erfindungsgemäße Verfahren eignet sich auch zur Reinigung von organischen Diphosphiten, bei denen eines der Phosphoratome oder beide Phosphoratome nicht Teil eines Heterocyclus sind. Derartige organische Diphosphite können z. B. durch Umsetzen von PCl₃ mit zwei Moläquivalenten bzw. vier Moläquivalenten der entsprechenden Monoalkohole (anstelle von einem Moläquivalent bzw. zwei Moläquivalenten der die Seitenflügel bildenden Diole) und anschließende Reaktion mit dem die verbrückende Gruppe zwischen den Phosphoratomen bildenden Diol erhalten werden. Derartige Diphosphitverbindungen und ihre Herstellung sind z. B. in der US 4,748,261,
US 4,885,401, US 5,235,113 und US 5,391,801 beschrieben. In einer besonders bevorzugten Ausführungsform kommen die in der US 4,668,651 genannten Verbindungen in Betracht, insbesondere die in Spalte 9, Zeile 25 bis Spalte 16, Zeile 53 und in den Beispielen 1 bis 11 beschriebenen Verbindungen sowie Ligand A bis Q.
In einer besonders bevorzugten Ausführungsform kommen die in der US 4,748,261 genannten Verbindungen in Betracht, insbesondere die in Spalte 14, Zeile 26 bis Spalte 62, Zeile 48 und in den Beispielen 1 bis 14 beschriebenen Verbindungen sowie Ligand 1 bis 8.

In einer besonders bevorzugten Ausführungsform kommen die in der US 4,769,498 genannten Verbindungen in Betracht, insbesondere die in Spalte 9, Zeile 27 bis Spalte 18, Zeile 14 und in den Beispielen 1 bis 14 beschriebenen Verbindungen sowie Ligand A bis Q.

In einer besonders bevorzugten Ausführungsform kommen die in der US 4,885,401 genannten Verbindungen in Betracht, insbesondere die in Spalte 12, Zeile 43 bis Spalte 30 und in den Beispielen 1 bis 14 beschriebenen Verbindungen sowie Ligand 1 bis 8.

In einer besonders bevorzugten Ausführungsform kommen die in der US 5,235,113 genannten Verbindungen in Betracht, insbesondere die in Spalte 7 bis Spalte 40, Zeile 11 und in den Beispielen 1 bis 22 beschriebenen Verbindungen.

In einer besonders bevorzugten Ausführungsform kommen die in der US 5,391,801 genannten Verbindungen in Betracht, insbesondere die in Spalte 7 bis Spalte 40, Zeile 38 und in den Beispielen 1 bis 22 beschriebenen Verbindungen.

In einer besonders bevorzugten Ausführungsform kommen die in der US 5,663,403 genannten Verbindungen in Betracht, insbesondere die in Spalte 5, Zeile 23 bis Spalte 26, Zeile 33 und in den Beispielen 1 bis 13 beschriebenen Verbindungen.

In einer besonders bevorzugten Ausführungsform kommen die in der US 5,728,861 genannten Verbindungen in Betracht, insbesondere die in Spalte 5, Zeile 23 bis Spalte 26, Zeile 23 und in den Beispielen 1 bis 13 beschriebenen Verbindungen sowie Ligand 1 bis 11.

In einer besonders bevorzugten Ausführungsform kommen die in der US 6,172,267 genannten Verbindungen in Betracht, insbesondere die in Spalte 11 bis Spalte 40, Zeile 48 und in den Beispielen 1 und 2 beschriebenen Verbindungen sowie Ligand 1 bis 11.

Erfindungsgemäß ist das organische Diphosphit ausgewählt unter Verbindungen der allgemeinen Formel (I) 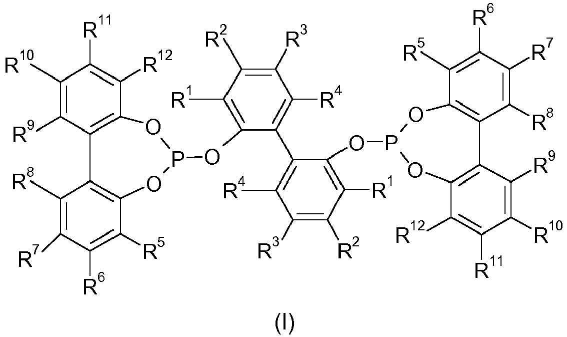 worin R¹ bis R¹² die zuvor und im Folgenden angegebenen Bedeutungen besitzen.

Im Rahmen der Erfindung steht Halogen für Fluor, Chlor, Brom oder lod, bevorzugt für Fluor, Chlor oder Brom.

Im Folgenden umfasst der Ausdruck "C₁-C₁₂-Alkyl" geradkettige und verzweigte C₁-C₁₂-Alkylgruppen. Vorzugsweise handelt es sich dabei um unsubstituierte geradkettige oder verzweigte C₁-C₈-Alkyl- und ganz besonders bevorzugt C₁-C₆-Alkylgruppen. Beispiele für C₁-C₁₂-Alkylgruppen sind insbesondere Methyl, Ethyl, Propyl, Isopropyl, n-Butyl, Isobutyl, sec.-Butyl, tert.-Butyl (1,1-Dimethylethyl), n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl, n-Octyl, 2-Ethylhexyl, 2-Propylheptyl, Nonyl, Decyl.

Die obigen Erläuterungen zum Ausdruck "C₁-C₁₂-Alkyl" gelten auch für die Alkylgruppen in C₁-C₁₂-Alkoxy. Vorzugsweise handelt es sich dabei um unsubstituierte geradkettige oder verzweigte C₁-C₆-Alkoxygruppen.

Substituierte C₁-C₁₂-Alkylgruppen und substituierte C₁-C₁₂-Alkoxygruppen können, in Abhängigkeit von ihrer Kettenlänge, einen oder mehrere (z. B. 1, 2, 3, 4 oder 5) Substituenten R^{a} aufweisen. Die Substituenten R^{a} sind vorzugsweise unabhängig voneinander ausgewählt unter C₃-C₁₂-Cycloalkyl, C₃-C₁₂-Heterocycloalkyl, C₆-C₂₀-Aryl, Fluor, Chlor, Brom, Cyano, Formyl, Acyl oder Alkoxycarbonyl.

Der Ausdruck "Alkylen" im Sinne der vorliegenden Erfindung steht für geradkettige oder verzweigte Alkandiyl-Gruppen mit vorzugsweise 1 bis 6 Kohlenstoffatomen. Dazu zählen Methylen (-CH₂-), Ethylen (-CH₂-CH₂-), n-Propylen (-CH₂-CH₂-CH₂-), Isopropylen (-CH₂-CH(CH₃)-), etc.

Der Ausdruck "C₃-C₁₂-Cycloalkyl" umfasst im Sinne der vorliegenden Erfindung mono-, bi- oder tricyclische Kohlenwasserstoffreste mit 3 bis 12, insbesondere 5 bis 12, Kohlenstoffatomen. Dazu zählen Cyclopropyl, Cyclobutyl, Cyclopentyl, Cyclohexyl, Cycloheptyl, Cyclooctyl, Cyclododecyl, Cyclopentadecyl, Norbornyl oder Adamantyl.

Der Ausdruck "C₃-C₁₂-Heterocycloalkyl" umfasst im Sinne der vorliegenden Erfindung nichtaromatische, gesättigte oder teilweise ungesättigte cycloaliphatische Gruppen mit 3 bis 12, insbesondere 5 bis 12, Kohlenstoffatomen. C₃-C₁₂-Heterocycloalkylgruppen weisen vorzugsweise 4 bis 8, besonders bevorzugt 5 oder 6, Ringatome auf. In den Heterocycloalkylgruppen sind im Unterschied zu den Cycloalkylgruppen 1, 2, 3 oder 4 der Ringkohlenstoffatome durch Heteroatome oder heteroatomhaltige Gruppen ersetzt. Die Heteroatome oder heteroatomhaltigen Gruppen sind vorzugsweise ausgewählt unter -O-, -S-, -C(=O)- oder -S(=O)₂-. Beispiele für C₃-C₁₂-Heterocycloalkylgruppen sind Tetrahydrothiophenyl, Tetrahydrofuranyl, Tetrahydropyranyl und Dioxanyl.

Substituierte C₃-C₁₂-Cycloalkylgruppen und substituierte C₃-C₁₂-Heterocycloalkylgruppen können, in Abhängigkeit von ihrer Ringgröße, einen oder mehrere (z. B. 1, 2, 3, 4 oder 5) Substituenten R^{b} aufweisen. Die Substituenten R^{b} sind vorzugsweise unabhängig voneinander ausgewählt unter C₁-C₁₂-Alkyl, C₁-C₁₂-Alkoxy, C₃-C₁₂-Cycloalkyl, C₃-C₁₂-Heterocycloalkyl, C₆-C₂₀-Aryl, Fluor, Chlor, Brom, Cyano, Formyl, Acyl oder Alkoxycarbonyl. Substituierte C₃-C₁₂-Cycloalkylgruppen tragen vorzugsweise eine oder mehrere, z. B. 1, 2, 3, 4 oder 5 C₁-C₆-Alkylgruppen. Substituierte C₃-C₁₂-Heterocycloalkylgruppen tragen vorzugsweise eine oder mehrere, z. B. 1, 2, 3, 4 oder 5 C₁-C₆-Alkylgruppen.

Beispiele für substituierte C₃-C₁₂-Cycloalkylgruppen sind z. B. 2- und 3-Methylcyclopentyl, 2- und 3-Ethylcyclopentyl, 2-, 3- und 4-Methylcyclohexyl, 2-, 3- und 4-Ethylcyclohexyl, 2-, 3- und 4-Propylcyclohexyl, 2-, 3- und 4-Isopropylcyclohexyl, 2-, 3- und 4-Butylcyclohexyl, 2-, 3- und 4-sec.-Butylcyclohexyl, 2-, 3- und 4-tert-Butylcyclohexyl, 2-, 3- und 4-Methylcycloheptyl, 2-, 3- und 4-Ethylcycloheptyl, 2-, 3- und 4-Propylcycloheptyl, 2-, 3- und 4-Isopropylcycloheptyl, 2-, 3- und 4-Butylcycloheptyl, 2-, 3- und 4-sec-Butylcycloheptyl, 2-, 3- und 4-tert-Butylcycloheptyl, 2-, 3-, 4- und 5-Methylcyclooctyl, 2-, 3-, 4- und 5-Ethylcyclooctyl, 2-, 3-, 4- und 5-Propylcyclooctyl.

Der Ausdruck "C₆-C₂₀-Aryl" umfasst im Sinne der vorliegenden Erfindung mono- oder polycyclische aromatische Kohlenwasserstoffreste. Diese weisen 6 bis 20 Ringatome, besonders bevorzugt 6 bis 14 Ringatome, insbesondere 6 bis 10 Ringatome, auf. Aryl steht vorzugsweise für C₆-C₁₀-Aryl. Aryl steht besonders bevorzugt für Phenyl, Naphthyl, Indenyl, Fluorenyl, Anthracenyl, Phenanthrenyl, Naphthacenyl, Chrysenyl, Pyrenyl, Coronenyl, Perylenyl, etc. Insbesondere steht Aryl für Phenyl oder Naphthyl.

Substituierte C₆-C₂₀-Arylgruppen können, in Abhängigkeit von ihrer Ringgröße, einen oder mehrere (z. B. 1, 2, 3, 4 oder 5) Substituenten R^{c} aufweisen. Die Substituenten R^{c} sind vorzugsweise unabhängig voneinander ausgewählt unter C₁-C₁₂-Alkyl, C₁-C₁₂-Alkoxy, C₃-C₁₂-Cycloalkyl, C₃-C₁₂-Heterocycloalkyl, C₆-C₂₀-Aryl, Fluor, Chlor, Brom, Cyano, Formyl, Acyl oder Alkoxycarbonyl.

Substituiertes C₆-C₂₀-Aryl ist vorzugsweise substituiertes C₆-C₁₀-Aryl, insbesondere substituiertes Phenyl oder substituiertes Naphthyl. Substituierte C₆-C₂₀-Arylgruppen tragen vorzugsweise eine oder mehrere, z.B. 1, 2, 3, 4 oder 5 Substituenten, ausgewählt unter C₁-C₆-Alkylgruppen, C₁-C₆-Alkoxygruppen, Chlor oder Brom.

Im Rahmen der vorliegenden Erfindung bezeichnet "Acyl" Alkanoyl- oder Aroylgruppen, die im Allgemeinen 2 bis 11, bevorzugt 2 bis 8 Kohlenstoffatome aufweisen. Dazu zählen z. B. Acetyl, Propanoyl, Butanoyl, Pentanoyl, Hexanoyl, Heptanoyl-, 2-Ethylhexanoyl, 2-Propylheptanoyl, Pivaloyl, Benzoyl oder Naphthoyl.

Carboxylat steht im Rahmen dieser Erfindung vorzugsweise für ein Derivat einer Carbonsäurefunktion, insbesondere für eine Carbonsäureesterfunktion oder eine Carbonsäureamidfunktion. Dazu zählen z. B. die Ester mit C₁-C₄-Alkanolen, wie Methanol, Ethanol, n-Propanol, Isopropanol, n-Butanol, sec.-Butanol und tert.-Butanol. Dazu zählen weiterhin die primären Amide und deren N-Alkyl- und N,N-Dialkylderivate.

Kondensierte Ringsysteme können durch Anellierung verknüpfte (ankondensierte) aromatische, hydroaromatische und cyclische Verbindungen sein. Kondensierte Ringsysteme bestehen aus zwei, drei oder mehr als drei Ringen. Je nach der Verknüpfungsart unterscheidet man bei kondensierten Ringsystemen zwischen einer ortho-Anellierung, d. h. jeder Ring hat mit jedem Nachbarring jeweils eine Kante bzw. zwei Atome gemeinsam, und einer peri-Anellierung, bei der ein Kohlenstoffatom mehr als zwei Ringen angehört. Bevorzugt unter den kondensierten Ringsystemen sind orthokondensierte Ringsysteme.

Bevorzugt stehen in den organischen Diphosphiten der allgemeinen Formel (I) die Reste R¹ und R³ unabhängig voneinander für C₁-C₄-Alkyl oder C₁-C₄-Alkoxy und R² und R⁴ für Wasserstoff. Vorzugsweise sind die Reste R¹ und R³ unabhängig voneinander ausgewählt unter Methyl, Ethyl, Isopropyl, tert.-Butyl und Methoxy, und R² und R⁴ stehen für Wasserstoff.

Bevorzugt stehen in den organischen Diphosphiten der allgemeinen Formel (I) die Reste R¹, R³ und R⁴ unabhängig voneinander für C₁-C₄-Alkyl oder C₁-C₄-Alkoxy und die Reste R² für Wasserstoff. Vorzugsweise sind R¹, R³ und R⁴ unabhängig voneinander ausgewählt unter Methyl, Ethyl und Methoxy, und R² steht für Wasserstoff.

Bevorzugt stehen in den organischen Diphosphiten der allgemeinen Formel (I) die Reste R⁴ unabhängig voneinander für C₁-C₄-Alkyl oder C₁-C₄-Alkoxy und R¹, R² und R³ für Wasserstoff. Vorzugsweise sind die Reste R⁴ unabhängig voneinander ausgewählt unter Methyl, Ethyl, Isopropyl, tert.-Butyl und Methoxy, und R¹, R² und R³ stehen für Wasserstoff.

Bevorzugt stehen in den organischen Diphosphiten der allgemeinen Formel (I) die Reste R¹ unabhängig voneinander für C₁-C₄-Alkyl oder C₁-C₄-Alkoxy und R², R³ und R⁴ stehen für Wasserstoff. Vorzugsweise sind die Reste R¹ unabhängig voneinander ausgewählt unter Methyl, Ethyl, Isopropyl, tert.-Butyl und Methoxy, und R², R³ und R⁴ stehen für Wasserstoff.

Bevorzugt stehen in den organischen Diphosphiten der allgemeinen Formel (I) die Reste R³ und R⁴ gemeinsam für einen kondensierten Benzolring, und R¹ und R² stehen für Wasserstoff. D. h. die Gruppe der Formel 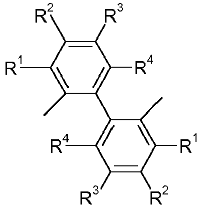 steht für

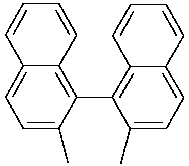

In den organischen Diphosphiten der allgemeinen Formel (I) können die beiden Gruppen 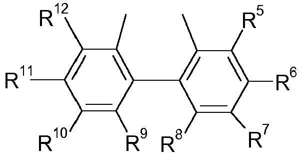 gleiche oder verschiedene Bedeutungen aufweisen. In einer bevorzugten Ausführungsform weisen beide Gruppen die gleiche Bedeutung auf.

Bevorzugt stehen in den organischen Diphosphiten der allgemeinen Formel (I) die Reste R⁵ und R¹² unabhängig voneinander für C₁-C₄-Alkyl oder C₁-C₄-Alkoxy und R⁶, R⁷, R⁸, R⁹, R¹⁰ und R¹¹ für Wasserstoff. Vorzugsweise sind R⁵ und R¹² unabhängig voneinander ausgewählt unter Methyl, Ethyl, Isopropyl, tert.-Butyl und Methoxy, und R⁶, R⁷, R⁸, R⁹, R¹⁰ und R¹¹ stehen für Wasserstoff.

Bevorzugt stehen in den organischen Diphosphiten der allgemeinen Formel (I) die Reste R⁵, R⁷, R¹⁰ und R¹² unabhängig voneinander für C₁-C₄-Alkyl oder C₁-C₄-Alkoxy, und R⁶, R⁸, R⁹ und R¹¹ stehen für Wasserstoff. Vorzugsweise sind R⁵, R⁷, R¹⁰ und R¹² unabhängig voneinander ausgewählt unter Methyl, Ethyl, Isopropyl, tert.-Butyl und Methoxy, und R⁶, R⁸, R⁹ und R¹¹ stehen für Wasserstoff.

Bevorzugt stehen in den organischen Diphosphiten der allgemeinen Formel (I) die Reste R⁵, R⁷, R⁸, R⁹, R¹⁰ und R¹² unabhängig voneinander für C₁-C₄-Alkyl oder C₁-C₄-Alkoxy, und R⁶ und R¹¹ stehen für Wasserstoff. Vorzugsweise sind R⁵, R⁷, R⁸, R⁹, R¹⁰ und R¹² unabhängig voneinander ausgewählt unter Methyl, Ethyl, Isopropyl, tert.-Butyl und Methoxy, und R⁶ und R¹¹ stehen für Wasserstoff.

Bevorzugt stehen in den organischen Diphosphiten der allgemeinen Formel (I) die Reste R⁸ und R⁹ unabhängig voneinander für C₁-C₄-Alkyl oder C₁-C₄-Alkoxy und R⁵, R⁶, R⁷, R¹⁰, R¹¹ und R¹² für Wasserstoff. Vorzugsweise sind R⁸ und R⁹ unabhängig voneinander ausgewählt unter Methyl, Ethyl, Isopropyl, tert.-Butyl und Methoxy, und R⁵, R⁶, R⁷, R¹⁰, R¹¹ und R¹² stehen für Wasserstoff.

Bevorzugt stehen in den organischen Diphosphiten der allgemeinen Formel (I) die Reste R⁵, R⁶, R⁷, R⁸, R⁹, R¹⁰, R¹¹ und R¹² für Wasserstoff.

Bevorzugt ist in den Verbindungen der allgemeinen Formel (I) die Gruppe 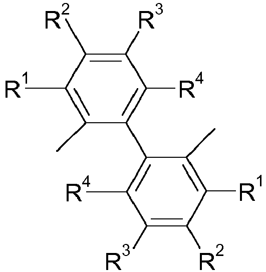 ausgewählt unter 3,3',5,5'-Tetramethyl-1,1'-biphenyl-2,2'-diyl, 3,3',5,5'-Tetraethyl-1,1'-biphenyl-2,2'-diyl, 3,3',5,5'-Tetra-n-propyl-1,1'-biphenyl-2,2'-diyl, 3,3'-Dimethyl-5,5'-dichlor-1,1 '-biphenyl-2,2'-diyl, 3,3'-Diethyl-5,5'-dibrom-1,1'-biphenyl-2,2'-diyl, 3,3'-Dimethyl-5,5'-diethyl-1,1'-biphenyl-2,2'-diyl, 3,3'-Dimethyl-5,5'-di-n-propyl-1,1'-biphenyl-2,2'-diyl, 3,3',5,5'-Tetra-isopropyl-1,1'-biphenyl-2,2'-diyl, 3,3',5,5'-Tetra-n-butyl-1,1'-biphenyl-2,2'-diyl, 3,3',5,5'-Tetra-isobutyl-1,1'-biphenyl-2,2'-diyl, 3,3',5,5'-Tetra-sec-butyl-1,1'-biphenyl-2,2'-diyl,3,3',5,5'-Tetra-(1,1-dimethylethyl)-1,1'-biphenyl-2,2'-diyl, 3,3'-Di-(1,1-dimethylethyl)-5,5'-di-n-amyl-1,1'-biphenyl-2,2'-diyl, 3,3',5,5'-Tetrakis(1,1-dimethylpropyl)-1,1'-biphenyl-2,2'-diyl,3,3'-Di-(1,1-dimethylethyl)-5,5'-bis(1,1-dimethylpropyl)-1,1'-biphenyl-2,2'-diyl, 3,3'-Di-(1,1-dimethylethyl)-5,5'-di-n-hexyl-1,1'-biphenyl-2,2'-diyl, 3,3'-Di-(1,1-dimethylethyl)-5,5'-di-2-hexyl-1,1'-biphenyl-2,2'-diyl, 3,3'-Di-(1,1-dimethylethyl)-5,5'-di-3-hexyl-1,1'-biphenyl-2,2'-diyl, 3,3'-Di-(1,1-dimethylethyl)-5,5'-di-n-heptyl-1,1'-biphenyl-2,2'-diyl, 3,3'-Di-(1,1-dimethylethyl)-5,5'-di-2-heptyl-1,1'-biphenyl-2,2'-diyl, 3,3'-Di-(1,1-dimethylethyl)-5,5'-di-3-heptyl-1,1'-biphenyl-2,2'-diyl, 3,3'-Di-(1,1-dimethylethyl)-5,5'-di-4-heptyl-1,1'-biphenyl-2,2'-diyl, 3,3'-Di-(1,1-dimethylethyl)-5,5'-di-n-octyl-1,1'-biphenyl-2,2'-diyl, 3,3'-Di-(1,1-dimethylethyl)-5,5'-di-2-octyl-1,1'-biphenyl-2,2'-diyl, 5,5'-Di-3-octyl-1,1'-biphenyl-2,2'-diyl, 3,3'-Di-(1,1-dimethylethyl)-5,5'-di-4-octyl-1,1'-biphenyl-2,2'-diyl, 3,3'-Di-(1,1-dimethylethyl)-5,5'-bis(1,1,3,3-tetramethylbutyl)-1,1'-biphenyl-2,2'-diyl, 3,3',5,5'-Tetrakis(1,1,3,3-tetramethylbutyl)-1,1'-biphenyl-2,2'-diyl, 3,3'-di-(1,1-dimethylethyl)-5,5',6,6'-Tetramethyl-1,1'-biphenyl-2,2'-diyl, 3,3'-Di-(1,1-dimethylethyl)-5,5'-diphenyl-1,1'-biphenyl-2,2'-diyl, 3,3'-Di-(1,1-dimethylethyl)-5,5'-bis(2,4,6,-trimethylphenyl)-1,1'-biphenyl-2,2'-diyl, 3,3'-Di-(1,1-dimethylethyl)-5,5'-dimethoxy-1,1'-biphenyl-2,2'-diyl, 3,3'-Di-(1,1-dimethylethyl)-5,5'-diethoxy-1,1'-biphenyl-2,2'-diyl, 3,3'-Di-(1,1-dimethylethyl)-5,5'-di-n-propoxy-1,1'-biphenyl-2,2'-diyl, 3,3'-Di-(1,1-dimethylethyl)-5,5'-di-isopropoxy-1,1'-biphenyl-2,2'-diyl, 3,3'-Di-(1,1-dimethylethyl)-5,5'-di-n-butoxy-1,1'-biphenyl-2,2'-diyl, 3,3'-Di-(1,1-dimethylethyl)-5,5'-di-sec-butoxy-1,1'-biphenyl-2,2'-diyl, 3,3'-Di-(1,1-dimethylethyl)-5,5'-di-iso-butoxy-1,1'-biphenyl-2,2'-diyl, 3,3'-Di-(1,1-dimethylethyl)-5,5'-di-tert-butoxy-1,1'-biphenyl-2,2'-diyl und 1,1'-Binaphthalinyl-2,2'-diyl.

Besonders bevorzugt steht die Gruppe 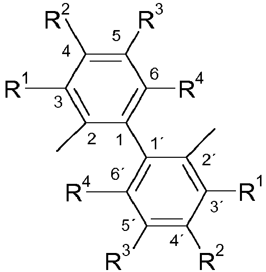 für 3,3',5,5'-Tetra-(1,1-dimethylethyl)-1,1'-biphenyl-2,2'-diyl. D. h. besonders bevorzugt stehen in den organischen Diphosphiten der allgemeinen Formel (I) die Reste R¹ und R³ alle für tert.-Butyl und R² und R⁴ alle für Wasserstoff.

Bevorzugt sind in den Verbindungen der allgemeinen Formel (I) die Gruppen 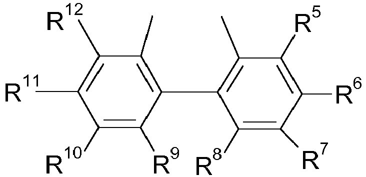 unabhängig voneinander ausgewählt unter 1,1'-Biphenyl-2,2'-diyl, 5,5'-Dimethyl-1,1'-biphenyl-2,2'-diyl, 5,5'-Dichlor-1,1'-biphenyl-2,2'-diyl, 5,5'-Dibrom-1,1'-biphenyl-2,2'-diyl, 5,5'-Diethyl-1,1'-biphenyl-2,2'-diyl, 5,5'-Di-n-propyl-1,1'-biphenyl-2,2'-diyl, 5,5'-Diisopropyl-1,1'-biphenyl-2,2'-diyl, 5,5'-Di-n-butyl-1,1'-biphenyl-2,2'-diyl, 5,5'-Di-sec-butyl-1,1'-biphenyl-2,2'-diyl, 5,5'-Di-iso-butyl-1,1'-biphenyl-2,2'-diyl, 5,5'-Di-(1,1-dimethylethyl)-1,1'-biphenyl-2,2'-diyl, 5,5'-Di-n-amyl-1,1'-biphenyl-2,2'-diyl, 5,5'-bis(1,1-dimethylpropyl)-1,1'-biphenyl-2,2'-diyl, 5,5'-Bis(1,1-dimethylpropyl)-1,1'-biphenyl-2,2'-diyl, 5,5'-Di-n-hexyl-1,1'-biphenyl-2,2'-diyl, 5,5'-Di-2-hexyl-1,1'-biphenyl-2,2'-diyl, 5,5'-Di-3-hexyl-1,1'-biphenyl-2,2'-diyl, 5,5'-Di-n-heptyl-1,1'-biphenyl-2,2'-diyl, 5,5'-Di-2-heptyl-1,1'-biphenyl-2,2'-diyl, 5,5'-Di-3-heptyl-1,1'-biphenyl-2,2'-diyl, 5,5'-Di-4-heptyl-1,1'-biphenyl-2,2'-diyl, 5,5'-Di-n-octyl-1,1'-biphenyl-2,2'-diyl, 5,5'-Di-2-octyl-1,1'-biphenyl-2,2'-diyl, 5,5'-Di-3-octyl-1,1'-biphenyl-2,2'-diyl, 5,5'-Di-4-octyl-1,1'-biphenyl-2,2'-diyl, 5,5'-Bis(1,1,3,3-tetramethylbutyl)-1,1'-biphenyl-2,2'-diyl,5,5',6,6'-Tetramethyl-1,1'-biphenyl-2,2'-diyl, 5,5'-Diphenyl-1,1'-biphenyl-2,2'-diyl, 5,5'-Bis(2,4,6,-trimethylphenyl)-1,1'-biphenyl-2,2'-diyl, 5,5'-Dimethoxy-1,1'-biphenyl-2,2'-diyl, 5,5'-Diethoxy-1,1'-biphenyl-2,2'-diyl, 5,5'-Di-n-propoxy-1,1'-biphenyl-2,2'-diyl, 5,5'-Di-isopropoxy-1,1'-biphenyl-2,2'-diyl, 5,5'-Di-n-butoxy-1,1'-biphenyl-2,2'-diyl, 5,5'-Di-sec-butoxy-1,1'-biphenyl-2,2'-diyl, 5,5'-Di-iso-butoxy-1,1'-biphenyl-2,2'-diyl, 5,5'-Di-tert-butoxy-1,1'-biphenyl-2,2'-diyl und 1,1'-Binaphthalinyl-2,2'-diyl.

Besonders bevorzugt stehen die Gruppen 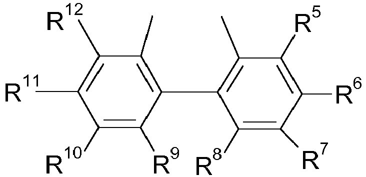 beide für 1,1'-Biphenyl-2,2'-diyl.

Besonders bevorzugt eignet sich das erfindungsgemäße Verfahren zur Reinigung der folgenden organischen Diphosphite:

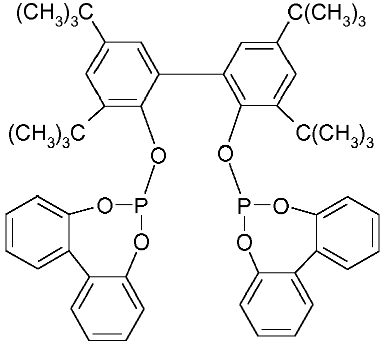

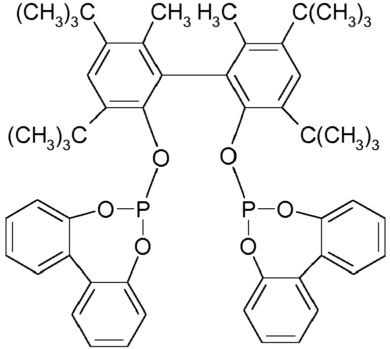

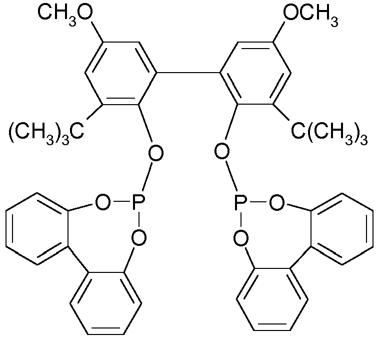

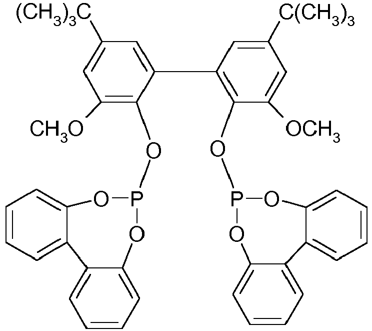

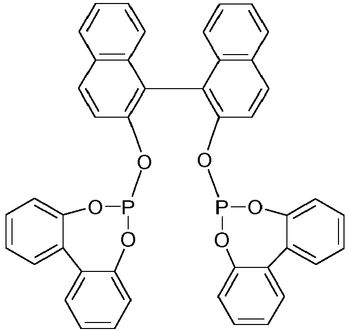

Insbesondere handelt es sich bei dem organischen Diphosphit der Formel (I) um 6,6'-[[3,3',5,5'-Tetrakis(1,1-dimethylethyl)-[1,1'-biphenyl]-2,2'-diyl]bis(oxy)]bis-dibenzo [d,f] [1,3,2]-dioxaphosphepin.

### Schritt a)

In einer bevorzugten Ausführungsform des erfindungsgemäßen Verfahrens handelt es sich bei der in Schritt a) bereitgestellten Lösung eines rohen organischen Diphosphits um einen Reaktionsaustrag der Herstellung der organischen Diphosphite.

Bevorzugt handelt es sich bei der in Schritt a) bereitgestellten Lösung eines rohen organischen Diphosphits um einen Reaktionsaustrag eines Herstellungsverfahrens, wie es in EP 0 214 622 A2, US 4,668,651, US 4,748,261, US 4,769,498, US 4,885,401, US 5,235,113, US 5,391,801, US 5,663,403, US 5,728,861, US 6,172,267,
WO 2003/062171 und WO 2003/062251 beschrieben ist.

In einer bevorzugten Ausführung handelt es sich bei der in Schritt a) bereitgestellten Lösung eines rohen organischen Diphosphits um einen Reaktionsaustrag eines Herstellungsverfahrens, wie es in WO 2003/062171 und WO 2003/062251 beschrieben ist.

Bevorzugt weist die in Schritt a) bereitgestellte Lösung eines rohen organischen Diphosphits ein Lösungsmittel auf, das ausgewählt ist unter Toluol, Ethylbenzol, o-, m- oder p-Xylol, Cumol, Anisol und Mischungen davon. Insbesondere wird ein Lösungsmittel eingesetzt, das Toluol enthält oder aus Toluol besteht. Selbstverständlich ist es zur Bereitstellung der Lösung eines rohen organischen Diphosphits in Schritt a) auch möglich, einen Reaktionsaustrag der Herstellung der organischen Diphosphite einem Lösungsmitteltausch zu unterziehen. Eine solche Vorgehensweise ist jedoch nicht bevorzugt.

Die Herstellung der erfindungsgemäß zur Reinigung eingesetzten Diphosphite kann prinzipiell durch eine Folge von bekannten Phosphorhalogenid-Alkohol-Kondensationsreaktionen erfolgen.

Eine spezielle Ausführung ist ein Verfahren, bei dem man zur Herstellung eines organischen Diphosphits (I) 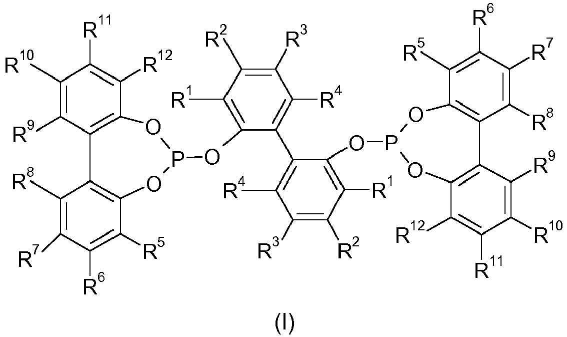 worin R¹, R², R³ und R⁴, R⁵, R⁶, R⁷, R⁸, R⁹, R¹⁰, R¹¹ und R¹², wie zuvor definiert sind,
i) ein Diol der allgemeinen Formel (Ai) 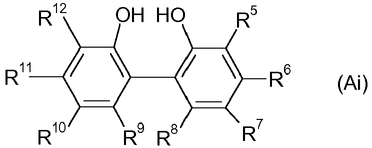 mit PCl₃ unter Erhalt einer Verbindung (A1) umsetzt 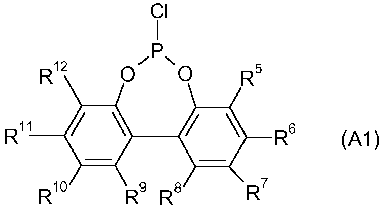
ii) wenigstens eine Verbindung (A1) mit einem Diol der allgemeinen Formel (Aii) 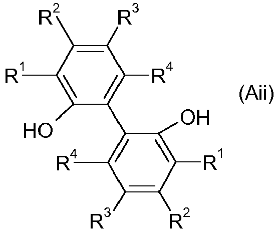 unter Erhalt des organischen Diphosphits (I) umsetzt.

Bezüglich geeigneter und bevorzugter Ausführungsformen der Reste R¹, R², R³, R⁴, R⁵, R⁶, R⁷, R⁸, R⁹, R¹⁰, R¹¹ und R¹² wird auf die zuvor gemachten Angaben zu diesen Resten in vollem Umfang Bezug genommen.

Als Lösungsmittel zur Herstellung der organischen Diphosphite wird vorzugsweise ein Lösungsmittel oder Lösungsmittelgemisch eingesetzt, das dem zuvor beschriebenen ersten Lösungsmittel (L1) entspricht.

Bevorzugt erfolgt wenigstens einer der Schritte i) oder ii) in Gegenwart einer Base.

Geeignete Basen sind allgemein z. B. Alkalimetallhydroxide, Erdalkalimetallhydroxide, Alkalimetallcarbonate, Erdalkalimetallcarbonate, Alkalimetallhydrogencarbonate, Erdalkalimetallhydrogencarbonate, tertiäre Amine, basische lonenaustauscherharze, etc. Dazu zählen z. B. NaOH, KOH, Ca(OH)₂, Triethylamin, Tripropylamin, Tributylamin, etc. Bevorzugt sind tertiäre Amine und speziell Triethylamin.

Besonders bevorzugt ist ein Verfahren, wobei wenigstens einer der Schritte i) oder ii) in Gegenwart einer Base erfolgt, die ausgewählt ist unter Basen, die mit der in dem jeweiligen Reaktionsschritt gebildeten Halogenwasserstoffsäure ein Salz bilden, das bei Temperaturen flüssig ist, bei denen das Reaktionsprodukt des jeweiligen Reaktionsschritts während der Abtrennung des flüssigen Salzes nicht signifikant zersetzt wird und das Salz mit dem Reaktionsmedium des jeweiligen Reaktionsschritts zwei nicht mischbare flüssige Phasen ausbildet.

Geeignete Basen dieses Typs sind in der WO 2003/062171 und WO 2003/062251 beschrieben, worauf hier in vollem Umfang Bezug genommen wird. Bevorzugte Basen dieses Typs sind 1-Methylimidazol, 1-n-Butylimidazol, 2-Methylpyridin und 2-Ethylpyridin.

Vorteilhafterweise lässt sich nach der zuletzt genannten Verfahrensvariante die Hauptmenge der bei den Kondensationsreaktionen aus Halogenwasserstoffsäure und Base gebildeten Säuresalze durch einfache Phasentrennung entfernen. Dennoch wirkt sich eine anschließende Reinigung des Reaktionsaustrags nach dem erfindungsgemäßen Reinigungsverfahren vorteilhaft auf das erhaltene organische Diphosphit (I) aus. So gelingt es, den Anteil der eingangs genannten Verunreinigungen noch weiter signifikant zu reduzieren.

In einer bevorzugten Ausführungsform erfolgt die Umsetzung in Schritt i) in Gegenwart einer katalytischen Menge eines Säuresalzes einer Stickstoffbase. Bevorzugt leitet sich das Säuresalz von einer Stickstoffbase ab, die ausgewählt ist unter jeweils unsubstituierten oder substituierten Imidazolen, Pyridinen, 1H-Pyrazolen, 1-Pyrazolinen, 3-Pyrazolinen, Imidazolinen, Thiazolen, Oxazolen, 1,2,4-Triazolen und 1,2,3-Triazolen. Besonders bevorzugt leitet sich das Säuresalz von einer Säure ab, die ausgewählt ist unter Chlorwasserstoff, p-Toluolsulfonsäure, Methansulfonsäure, 2,4,6-Trimethylbenzoesäure und Trifluormethansulfonsäure. Insbesondere wird N-Methylimidazoliumhydrochlorid eingesetzt.

### Schritt b1) (= Verfahrensvariante 1)

Erfindungsgemäß wird nach dieser Verfahrensvariante das organische Diphosphit durch teilweises Entfernen des ersten Lösungsmittels (L1) teilweise ausgefällt und zur Vervollständigung der Fällung das zweite Lösungsmittel (L2) zugegeben.

Das teilweise Entfernen des ersten Lösungsmittels (L1) kann nach üblichen, dem Fachmann bekannten Verfahren erfolgen. Dazu zählt das Verdampfen unter vermindertem Druck und/oder erhöhter Temperatur.

Bevorzugt wird das Lösungsmittel (L1) zu mindestens 10 Gew.-%, bevorzugt mindestens 20 Gew.-%, insbesondere mindestens 30 Gew.-%, bezogen auf die ursprünglich eingesetzte Menge, entfernt. Sofern als erstes Lösungsmittel (L1) Toluol eingesetzt wird, so wird dieses speziell zu mindestens 50 Gew.-%, spezieller zu mindestens 60 Gew.-%, bezogen auf die ursprünglich eingesetzte Menge, entfernt.

Bevorzugt wird das Lösungsmittel (L1) zu höchstes 95 Gew.-%, besonders bevorzugt zu höchstens 90 Gew.-%, bezogen auf die ursprünglich eingesetzte Menge, entfernt.

Beim Entfernen des Lösungsmittels (L1) fällt das organische Diphosphit teilweise aus.

In einer bevorzugten Ausführung wird vor der Zugabe des zweiten Lösungsmittels (L2) die das erste Lösungsmittel (L1) und das teilweise ausgefällte organische Diphosphit enthaltende Zusammensetzung abgekühlt und die Temperatur während der Zugabe des zweiten Lösungsmittels (L2) niedrig gehalten. Bevorzugt beträgt die Temperatur während der Zugabe des zweiten Lösungsmittels (L2) höchstens 20 °C, besonders bevorzugt höchstens 15 °C.

### Schritt b2) (= Verfahrensvariante 2)

Vorzugsweise weist die in Schritt a) bereitgestellte Lösung bei der Zugabe zu dem zweiten Lösungsmittel in Schritt b2) eine Temperatur in einem Bereich von 50 bis 180 °C, bevorzugt 60 bis 150 °C, insbesondere 70 bis 130 °C, auf.

Vorzugsweise weist in Schritt b2) das zweite Lösungsmittel bei der Zugabe eine Temperatur in einem Bereich von 0 bis 50 °C, bevorzugt 15 bis 45 °C, insbesondere 15 bis 30 °C, auf.

Vorzugsweise beträgt in Schritt b2) die Temperaturdifferenz bei der Zugabe der in Schritt a) bereitgestellten Lösung zu dem zweiten Lösungsmittel wenigstens 20 °C, bevorzugt wenigstens 30 °C, insbesondere wenigstens 40 °C.

In einer bevorzugten Ausführungsform wird in Schritt b2) das zweite Lösungsmittel (L2) vorlegt und die in Schritt a) bereitgestellte Lösung des organischen Diphosphits als Zuführstrom in den Raum über dem vorgelegten Lösungsmittel (L2) eingespeist.

Dazu kann eine übliche Zugabevorrichtung eingesetzt werden, deren Auslauföffnung oberhalb des vorgelegten Lösungsmittels (L2) endet. Die Zugabe kann in Form einzelner Tropfen oder strahlförmig erfolgen. Die Zulaufmenge kann durch eine übliche Dosiervorrichtung, z. B. ein Ventil, Dosierpumpe, etc., geregelt werden. Wird eine heiße Lösung des organischen Diphosphits zu dem vorgelegten Lösungsmittel (L2) gegeben, so kann die Zugabevorrichtung wärmeisoliert sein.

Zweckmäßigerweise wird die Zugabe der Lösung des organischen Diphosphits in das Lösungsmittel (L2) so durchgeführt, dass sie im freiem Fall erfolgt, d. h. ohne Berührung der Wände und ohne Berührung der Rührerblätter, so dass eine Klumpenbildung vermieden wird.

### Schritt c)

Erfindungsgemäß wird in Schritt c) nach beiden zuvor genannten Verfahrensvarianten das ausgefällte organische Diphosphit von der flüssigen Phase abgetrennt.

Die Abtrennung kann beispielsweise durch Filtration oder Zentrifugieren erfolgen. Bevorzugt erfolgt die Abtrennung durch Filtration. Übliche Filtrationsverfahren sind z. B. die Kuchen- und Tiefenfiltration (z. B. beschrieben in A. Rushton, A. S. Ward, R. G. Holdich: Solid-Liquid Filtration and Separation Technology, VCH Verlagsgesellschaft, Weinheim 1996, Seiten 177ff., K. J. Ives, in A. Rushton (Hg.): Mathematical Models and Design Methods in Solid-Liquid Separation, NATO ASI Series E Nr. 88, Martinus Nijhoff, Dordrecht 1985, Seiten 90ff.) und Cross-flow-Filtrationen (z. B. beschrieben in J. Altmann, S. Ripperger, J. Membrane Sci. 124 (1997), Seiten 119 - 128). Zur Beschleunigung kann die Filtration unter feststoffseitig erhöhtem oder auslaufseitig vermindertem Druck erfolgen. Übliche Zentrifugations-Verfahren sind z. B. in G. Hultsch, H. Wilkesmann, "Filtering Centrifuges," in D. B. Purchas, Solid - Liquid Separation, Upland Press, Croydon 1977, SS. 493 - 559; und H. Trawinski in "Die äquivalente Klärfläche von Zentrifugen", Chem. Ztg. 83 (1959), 606-612 beschrieben. Verschiedene Bauformen wie Röhren- und Korbzentrifugen sowie Schub-, Stülpfilterzentrifugen und Tellerseparatoren können eingesetzt werden.

Die in Schritt c) abgetrennte flüssige Phase kann gewünschtenfalls einer Aufarbeitung unterzogen werden. In einer bevorzugten Ausführungsform des erfindungsgemäßen Verfahrens wird die flüssige Phase einer Auftrennung in eine im Wesentlichen die das erste Lösungsmittel (L1) und das zweite Lösungsmittel (L2) enthaltende Fraktion (C1) und eine im Wesentlichen die Verunreinigungen enthaltende Fraktion (C2) unterzogen. Dazu kann beispielsweise das erste und zweite Lösungsmittel (L1 und L2) durch Verdampfen zumindest teilweise von der flüssigen Phase abgetrennt werden. Geeignete Trennvorrichtungen sind die dafür üblichen Destillationskolonnen und Verdampfer, wie z. B. Fallfilmverdampfer, Zwangsumlaufentspannungsverdampfer, Kurzwegverdampfer oder Dünnschichtverdampfer. Aufgrund der geringen Flüchtigkeit der meisten Verunreinigungen kann in der Regel auf aufwendige Vorrichtungen, wie sie bei der Trennung von Gemischen mit nahe beieinander liegenden Siedepunkten zum Einsatz kommen, wie aufwendige Kolonnen-Einbauten, Kolonnen mit hoher Anzahl theoretischer Böden, etc., verzichtet werden. Die das erste Lösungsmittel (L1) und das zweite Lösungsmittel (L2) enthaltende Fraktion (C1) kann einer weiteren Auftrennung in eine im Wesentlichen das erste Lösungsmittel (L1) enthaltende Fraktion (C1L1) und eine im Wesentlichen das zweite Lösungsmittel (L2) enthaltende Fraktion(C1L2) unterzogen werden. Geeignete Vorrichtungen zur destillativen Aufarbeitung umfassen Destillationskolonnen, wie Bodenkolonnen, die mit Glocken, Siebplatten, Siebböden, Packungen, Füllkörpern, Ventilen, Seitenabzügen, etc. ausgerüstet sein können, Verdampfer, wie Dünnschichtverdampfer, Fallfilmverdampfer, Zwangsumlaufverdampfer, Sambay-Verdampfer, etc., und Kombinationen davon.

Die Fraktionen (C1L1) und/oder (C1L2) können erneut als erstes Lösungsmittel (L1) und/oder als zweites Lösungsmittel (L2) zur Reinigung von organischen Diphosphiten nach dem erfindungsgemäßen Verfahren eingesetzt werden. Dabei ist es in der Regel unkritisch, wenn das zweite Lösungsmittel (L2) geringe Anteile (z. B. bis zu etwa 5 Gew.-%) des ersten Lösungsmittels (L1) enthält.

Die im Wesentlichen die Verunreinigungen enthaltende Fraktion (C2) wird aus dem Verfahren ausgeschleust. Sie kann z. B. einer thermischen Verwertung zugeführt werden.

Das in Schritt c) des erfindungsgemäßen Verfahrens erhaltene organische Diphosphit weist bereits eine ausreichende Reinheit für einen Einsatz als Liganden in der homogenen Katalyse auf. Es kann jedoch, insbesondere für den Einsatz in einem kontinuierlichen katalytischen Verfahren, vorteilhaft sein, das in Schritt c) abgetrennte organische Diphosphit einer weiteren Wäsche in Schritt d) zu unterziehen.

### Schritt d)

In einer speziellen Ausführung des erfindungsgemäßen Verfahrens wird das in Schritt c) erhaltene organische Diphosphit einer weiteren Aufarbeitung durch Wäsche mit einem flüssigen Waschmedium unterzogen.

Eine Behandlung mit einem flüssigen Waschmedium hat sich sowohl für die nach Verfahrensvariante 1 (Schritte a), b1) und c)) als auch für die nach Verfahrensvariante 2 (Schritte a), b2) und c)) erhaltenen kristallinen organischen Diphosphite als vorteilhaft erwiesen. Für die nach Verfahrensvariante 2 (Schritte a), b2) und c)) erhaltenen organischen Diphosphite ist zusätzlich zu einer ein- oder mehrfachen Behandlung mit einem flüssigen Waschmedium keine weitere Reinigung erforderlich.

Falls die nach Verfahrensvariante 1 (Schritte a), b1) und c)) erhaltenen organischen Diphosphite noch geringe Mengen an eingeschlossenen (okkludierten) Lösungsmitteln und/oder geringe Mengen an Verunreinigungen enthalten, so können sie in Schritt d) einer zusätzlichen Aufarbeitung unterzogen werden, die eine Umkristallisation umfasst. Bevorzugt ist bei Variante 1) eine Kombination aus einer Umkristallisation und einer Behandlung mit einem flüssigen Waschmedium.

Geeignete Waschmedien sind die zuvor genannten. Ein besonders bevorzugtes Waschmedium ist Methanol.

Bevorzugt erfolgt die Behandlung des organischen Diphosphits mit einem Waschmedium bei Umgebungstemperatur. Vorzugsweise erfolgt die Behandlung des organischen Diphosphits mit einem Waschmedium bei einer Temperatur von wenigstens 15 °C, besonders bevorzugt bei einer Temperatur von 15 bis 20 °C. Bevorzugt erfolgt die Behandlung des organischen Diphosphits mit einem Waschmedium bei einer Temperatur von höchstens 30 °C.

Zur Entfernung der enthaltenen Verunreinigungen kann das in Schritt c) erhaltene organische Diphosphit einmal oder mehrmals nacheinander einer Behandlung mit einem Waschmedium unterzogen werden. Dazu wird das organische Diphosphit in einer geeigneten Vorrichtung mit dem Waschmedium in innigen Kontakt gebracht und das Waschmedium anschließend von dem organischen Diphosphit abgetrennt. Geeignete Vorrichtungen sind z. B. Rührkessel, die, soweit erforderlich, mit einer Heizvorrichtung und einer Vorrichtung zur Kondensation und Rückführung des Waschmediums versehen sein können. Eine andere geeignete Vorrichtung ist eine Nutsche, bei der der Filterkuchen mit dem Waschmedium gewaschen wird. Die Trennung von organischem Diphosphit und Waschmedium erfolgt z. B. durch Filtration oder Zentrifugieren. Zur Beschleunigung kann die Filtration unter feststoffseitig erhöhtem oder auslaufseitig vermindertem Druck erfolgen.

Wie zuvor erwähnt, wird dem Waschmedium bevorzugt eine Base zugegeben. Bei mehreren Waschschritten kann die Base in einem oder in mehreren der Waschschritte zugegeben werden. Dies gilt bei mehreren Waschschritten beispielsweise für das im letzten Waschschritt eingesetzte Waschmedium. Wird das organische Diphosphit zunächst einer ein- oder mehrfachen Wäsche mit Methanol und abschließend einer Wäsche mit Aceton unterzogen, so wird die Base bevorzugt wenigstens einem der Waschschritte mit Methanol zugesetzt. Besonders bevorzugt wird die Base allen Waschschritten mit Methanol zugesetzt. In einer bevorzugten Ausführungsform wird das in Schritt c) erhaltene organische Diphosphit zunächst einer ein- oder mehrfachen Wäsche mit basischem Methanol und einer abschließenden Wäsche mit Aceton zur Verdrängung des Methanols und Verdrängung von Basenresten unterzogen.

Geeignete Basen sind die eingangs als Zusatz zum Waschmedium genannten. Bevorzugt wird als Base ein Alkalimetallalkoholat, insbesondere Natriummethanolat, eingesetzt.

In einer speziellen Ausführungsform wird als Waschmedium Methanol eingesetzt, dem Natriummethanolat zugesetzt wurde.

Bevorzugt wird dem Waschmedium eine Base in einer Menge von 0,01 bis 10 Gew.-%, besonders bevorzugt 0,05 bis 1 Gew.-%, insbesondere 0,05 bis 0,5 Gew.-%, bezogen auf das Gesamtgewicht des zweiten Lösungsmittels (L2), zugesetzt.

Das mit Verunreinigungen beladene Waschmedium kann z. B. destillativ aufgearbeitet und erneut als Waschmedium eingesetzt werden. Abgetrennte Verunreinigungen werden ausgeschleust.

Die nach dem erfindungsgemäßen Reinigungsverfahren erhaltenen Verbindungen der allgemeinen Formel (I) eignen sich vorteilhaft als Liganden für Katalysatoren in kontinuierlichen Verfahren. Hier können die mit einer Aufpegelung der zuvor genannten Verunreinigungen verbundenen Nachteile, wie insbesondere eine Verringerung der Katalysatorstandzeit, signifikant verringert werden. Die nach dem erfindungsgemäßen Reinigungsverfahren erhaltenen Verbindungen der allgemeinen Formel (I) zeichnen sich weiterhin durch eine gute Fließfähigkeit aus. Sie zeigen zudem eine geringe Neigung zum Verbacken und können auch über längere Zeiträume gelagert werden. Vorteilhafterweise ist eine mechanische Zerkleinerung vor der Anwendung in vielen Fällen nicht erforderlich.

Die nach dem erfindungsgemäßen Reinigungsverfahren erhaltenen Verbindungen der allgemeinen Formel (I) eignen sich vorteilhaft als Liganden für Übergangsmetallkatalysatoren für die Hydroformylierung, Hydrocyanierung oder Hydrierung.

Im Allgemeinen liegt die Metallkonzentration im Reaktionsmedium in einem Bereich von etwa 1 bis 10000 ppm. Das Molmengenverhältnis von Ligand zu Übergangsmetall liegt im Allgemeinen in einem Bereich von etwa 0,5 : 1 bis 1000 : 1, vorzugsweise 1 : 1 bis 500 : 1.

Der Fachmann wird das Übergangsmetall in Abhängigkeit von der zu katalysierenden Reaktion auswählen. Bevorzugt handelt es sich bei dem Übergangsmetall um ein Metall der Gruppen 8, 9 oder 10 des Periodensystems der Elemente. Besonders bevorzugt ist das Übergangsmetall ausgewählt unter den Metallen der Gruppen 9 oder 10 (d. h. Co, Ni, Rh, Pd, Ir, Pt).

Die in einem der zuvor genannten Verfahren eingesetzten Katalysatoren können zusätzlich zu den zuvor beschriebenen Verbindungen der Formel (I) noch wenigstens einen weiteren Liganden, der vorzugsweise ausgewählt ist unter Carboxylaten, Acetylacetonat, Arylsulfonaten, Alkylsulfonaten, Hydrid, CO, Olefinen, Dienen, Cycloolefinen, Nitrilen, Aromaten und Heteroaromaten, Ethern und ein-, zwei- und mehrzähnigen Phosphoramidit- und Phosphitliganden. Speziell sind die weiteren Liganden ausgewählt unter Hydrid, CO und Olefinen, d. h. Komponenten, die befähigt sind, unter Hydroformylierungsbedingungen zusammen mit dem Diphosphit (I) und dem Zentralatom die aktive Form des Katalysators zu bilden.

Nach einer bevorzugten Ausführungsform werden die erfindungsgemäß eingesetzten Katalysatoren in situ in dem für die Reaktion eingesetzten Reaktor hergestellt. Gewünschtenfalls können die Katalysatoren jedoch auch separat hergestellt und nach üblichen Verfahren isoliert werden. Zur in situ-Herstellung der erfindungsgemäßen Katalysatoren kann man z. B. wenigstens einen erfindungsgemäß gereinigten Liganden, eine Verbindung oder einen Komplex eines Übergangsmetalls, gegebenenfalls wenigstens einen weiteren zusätzlichen Liganden und gegebenenfalls ein Aktivierungsmittel in einem inerten Lösungsmittel unter den Bedingungen der zu katalysierenden Reaktion umsetzen.

Als Katalysator-Precursor geeignet sind ganz allgemein Übergangsmetalle, Übergangsmetallverbindungen und Übergangsmetallkomplexe.

Geeignete Rhodiumverbindungen oder -komplexe sind z. B. Rhodium(II)- und Rhodium(III)-salze, wie Rhodium(II)-bzw. Rhodium(III)-carboxylat, Rhodium(II)- und Rhodium(III)-acetat, etc. Weiterhin eignen sich Rhodiumkomplexe, wie Rhodiumbiscarbonylacetylacetonat, Acetylacetonatobisethylenrhodium(I) Acetylacetonatocyclooctadienylrhodium(I), Acetylacetonatonorbornadienylrhodium(I), Acetylacetonatocarbonyltriphenylphosphinrhodium(I), etc.

Geeignete Cobaltverbindungen zur Herstellung der Hydroformylierungskatalysatoren sind z. B. Cobalt(II)sulfat, Cobalt(II)carbonat, deren Amin- or Hydratkomplexe, Cobaltcarboxylate, wie Cobaltacetat, Cobaltethylhexanoat, Cobaltnaphthanoat, und Cobaltcaproat. Geeignet sind auch Carbonylkomplexe des Cobalts, wie Dicobaltoctacarbonyl, Tetracobaltdodecacarbonyl und Hexacobalthexadecacarbonyl.

Die genannten und weitere geeignete Übergangsmetallverbindungen und -komplexe sind im Prinzip bekannt und in der Literatur hinreichend beschrieben, oder sie können vom Fachmann analog zu den bereits bekannten Verbindungen hergestellt werden.

Die erfindungsgemäßen Katalysatoren eignen sich vorzugsweise für einen Einsatz zur Hydroformylierung. Bei Katalysatoren für Hydroformylierungen werden im Allgemeinen unter den Hydroformylierungsbedingungen aus den jeweils eingesetzten Katalysatoren oder Katalysatorvorstufen katalytisch aktive Spezies gebildet. Hierfür wird als Metall vorzugsweise ein Element der 9. Gruppe des Periodensystems der Elemente und insbesondere Rhodium oder Cobalt verwendet.

Bei der Hydroformylierung und/oder der Aufarbeitung der Katalysatoren können Maßnahmen ergriffen werden, die die katalytische Aktivität erhöhen und/oder eine Zersetzung des Katalysators vermeiden. Solche Verfahren sind z. B. in EP 0 590 613, EP 0 865 418, EP 0 874 796, EP 0 874 797, EP 0 876 321, EP 0 876 322, EP 0 904 259, EP 1 019 352 und EP 1 019 353 beschrieben. Die Hydroformylierung kann in einem geeigneten, unter den jeweiligen Reaktionsbedingungen inerten Lösungsmittel durchgeführt werden. Geeignete Lösungsmittel sind z. B. die bei der Hydroformylierung gebildeten Aldehyde und höher siedende Reaktionskomponenten, z. B. die Produkte der Aldolkondensation. Weiterhin geeignet sind Aromaten, wie Toluol und Xylole, Kohlenwasserstoffe oder Gemische von Kohlenwasserstoffen, Ester aliphatischer Carbonsäuren mit Alkanolen, beispielsweise Texanol®, und Ester aromatischer Carbonsäuren , z. B. C₈-C₁₃-Dialkylphthalate.

Bezüglich der Herstellung und der Verwendung von Hydroformylierungskatalysatoren wird auf die Lehre der folgenden Dokumente Bezug genommen: EP 0 214 622 A2, US 4,668,651, US 4,748,261, US 4,769,498, US 4,885,401, US 5,235,113, US 5,391,801, US 5,663,403, US 5,728,861, US 6,172,267, DE 103 60 771 A1, WO 2003/062171 und WO 2003/062251.
Geeignete Olefin-Einsatzmaterialien für das erfindungsgemäße Hydroformylierungsverfahren sind prinzipiell alle Verbindungen, welche eine oder mehrere ethylenisch ungesättigte Doppelbindungen enthalten. Dazu zählen Olefine mit endständigen und mit innenständigen Doppelbindungen, geradkettige und verzweigte Olefine, cyclische Olefine sowie Olefine, die unter den Hydroformylierungsbedingungen im Wesentlichen inerte Substituenten aufweisen. Bevorzugt sind Olefin-Einsatzmaterialien, die Olefine mit 2 bis 12, besonders bevorzugt mit 3 bis 8 Kohlenstoffatomen enthalten.
Geeignete α-Olefine sind z. B. Ethylen, Propen, 1-Buten, 1-Penten, 1-Hexen, 1-Hepten, 1-Octen, 1-Nonen, 1-Decen, 1-Undecen, 1-Dodecen, etc. Bevorzugte verzweigte interne Olefine sind C₄-C₂₀-olefine, wie 2-Methyl-2-buten, 2-Methyl-2-penten, 3-Methyl-2-penten, interne Hepten-Gemische, verzweigte, interne Octen-Gemische, verzweigte, interne Nonen-Gemische, verzweigte, interne Decen-Gemische, verzweigte, interne Undecen-Gemische, verzweigte, interne Dodecen-Gemische etc. Geeignete Olefine sind weiterhin C₅-C₈-Cycloalkene, wie Cyclopenten, Cyclohexen, Cyclohepten, Cycloocten und deren Derivate, wie z. B. deren C₁-C₂₀-Alkylderivate mit 1 bis 5 Alkylsubstituenten. Geeignete Olefine sind weiterhin Vinylaromaten, wie Styrol, α-Methylstyrol, 4-Isobutylstyrol etc. Geeignete Olefine sind weiterhin die Ester, Halbester und Amide α,β-ethylenisch ungesättigte Mono- und/oder Dicarbonsäuren, wie 3-Pentensäuremethylester, 4-Pentensäuremethylester, Ölsäuremethylester, Acrylsäuremethylester, Methacrylsäuremethylester, ungesättigte Nitrile, wie 3-Pentennitril, 4-Pentennitril, Acrylnitril, Vinylether, wie Vinylmethylether, Vinylethylether, Vinylpropylether etc., Vinylchlorid, Allylchlorid, C₃-C₂₀-Alkenole, -Alkendiole und -Alkadienole, wie Allylalkohol, Hex-1-en-4-ol, Oct-1-en-4-ol, 2,7-Octadienol-1. Geeignete Substrate sind weiterhin Di- oder Polyene mit isolierten oder konjugierten Doppelbindungen. Dazu zählen z. B. 1,3-Butadien, 1,4-Pentadien, 1,5-Hexadien, 1,6-Heptadien, 1,7-Octadien, 1,8-Nonadien, 1,9-Decadien, 1,10-Undecadien, 1,11-Dodecadien, 1,12-Tridecadien, 1,13-Tetradecadien, Vinylcyclohexen, Dicyclopentadien, 1,5,9-Cyclooctatrien sowie Butadienhomo- und -copolymere.

In einer speziellen Ausführung wird in dem Hydroformylierungsverfahren ein technisch zur Verfügung stehendes olefinhaltiges Kohlenwasserstoffgemisch eingesetzt.

Ein bevorzugtes technisches Olefingemisch ist der C₄-Schnitt. C₄-Schnitte sind beispielsweise durch Fluid Catalytic Cracking oder Steamcracken von Gasöl bzw. durch Steamcracken von Naphtha erhältlich. Je nach Zusammensetzung des C₄-Schnitts unterscheidet man den Gesamt-C₄-Schnitt (Roh-C₄-Schnitt), das nach der Abtrennung von 1,3-Butadien erhaltene so genannte Raffinat I sowie das nach der Isobutenabtrennung erhaltene Raffinat II. Raffinat II ist als olefinhaltiges Kohlenwasserstoffgemisch für die Hydroformylierung besonders geeignet.

Ein weiteres bevorzugtes technisches Olefingemisch ist der C₃-Schnitt. Als Ausgangsmaterial geeignete Propylenströme können neben Propen auch Propan enthalten. Der Propangehalt beträgt z. B. 0,5 to 40 Gew.-%, speziell 2 to 30 Gew.-% Propan.

Die Reaktionsbedingungen der zuvor genannten Verfahren sind dem Fachmann prinzipiell bekannt. Geeignete Reaktoren und Reaktionsbedingungen kann der Fachmann somit der einschlägigen Literatur zu dem jeweiligen Verfahren entnehmen und routinemäßig anpassen. Geeignete Reaktionstemperaturen liegen im Allgemeinen in einem Bereich von -100 bis 500 °C, vorzugsweise in einem Bereich von -80 bis 250 °C. Geeignete Reaktionsdrücke liegen im Allgemeinen in einem Bereich von 0,0001 bis 600 bar, bevorzugt von 0,5 bis 300 bar. Die Verfahren können im Allgemeinen kontinuierlich, semikontinuierlich oder diskontinuierlich erfolgen. Bevorzugt sind kontinuierliche Verfahren. Geeignete Reaktoren für die kontinuierliche Umsetzung sind dem Fachmann bekannt und werden z. B. in Ullmanns Enzyklopädie der technischen Chemie, Bd. 1, 3. Aufl., 1951, S. 743 ff. beschrieben. Geeignete druckfeste Reaktoren sind dem Fachmann ebenfalls bekannt und werden z. B. in Ullmanns Enzyklopädie der technischen Chemie, Bd. 1, 3. Auflage, 1951, S. 769 ff. beschrieben.

Die nach dem erfindungsgemäßen Reinigungsverfahren erhaltenen Verbindungen der allgemeinen Formel (I) eignen sich vorteilhaft als Liganden für Katalysatoren für die Hydrocyanierung.

Auch die zur Hydrocyanierung eingesetzten Katalysatoren umfassen Komplexe eines Metalls der VIII. Nebengruppe, insbesondere Nickel, Ruthenium, Rhodium, Palladium, Platin, bevorzugt Nickel, Palladium und Platin und ganz besonders bevorzugt Nickel. Die Herstellung der Metallkomplexe kann wie zuvor beschrieben erfolgen. Gleiches gilt für die in situ-Herstellung der erfindungsgemäßen Hydrocyanierungskatalysatoren. Verfahren zur Hydrocyanierung sind in J. March, Advanced Organic Chemistry, 4. Aufl., S. 811 - 812 beschrieben, worauf hier Bezug genommen wird.
Bezüglich der Herstellung und Verwendung von Hydrocyanierungskatalysatoren wird auf die US 6,127,567 verwiesen. Die nach dem erfindungsgemäßen Verfahren gereinigten organischen Diphosphite eignen sich weiterhin vorteilhaft als Liganden eines Hydrierkatalysators. Bevorzugt enthalten die zur Hydrierung eingesetzten erfindungsgemäßen Katalysatoren wenigstens ein Metall der Gruppen 9 oder 10 des Periodensystems der Elemente, d. h. ein Metall, das ausgewählt ist unter Rh, Ir, Ni, Co, Pd und Pt.
Die einzusetzende Katalysatormenge hängt unter anderem vom jeweiligen katalytisch aktiven Metall und von dessen Einsatzform ab und kann vom Fachmann im Einzelfall bestimmt werden. So wird beispielsweise ein Ni- oder Co-haltiger Hydrierungskatalysator in einer Menge von vorzugsweise 0,1 bis 70 Gew.-%, besonders bevorzugt von 0,5 bis 20 Gew.-% und insbesondere von 1 bis 10 Gew.%, bezogen auf das Gewicht der zu hydrierenden Verbindung, eingesetzt. Die angegebene Katalysatormenge bezieht sich dabei auf die Menge an Aktivmetall, d. h. auf die katalytisch wirksame Komponente des Katalysators. Bei Verwendung von Edelmetallkatalysatoren, die beispielsweise Rhodium, Ruthenium, Platin oder Palladium enthalten, werden in etwa um einen Faktor 10 kleinere Mengen verwendet.
Die Hydrierung erfolgt vorzugsweise bei einer Temperatur im Bereich von 0 bis 250 °C, besonders bevorzugt im Bereich von 20 bis 200 °C und insbesondere im Bereich von 50 bis 150 °C.

Der Reaktionsdruck der Hydrierreaktion liegt vorzugsweise im Bereich von 1 bis 300 bar, besonders bevorzugt im Bereich von 50 bis 250 bar und insbesondere im Bereich von 150 bis 230 bar.

Sowohl Reaktionsdruck als auch Reaktionstemperatur hängen unter anderem von der Aktivität und Menge des eingesetzten Hydrierkatalysators ab und können im Einzelfall vom Fachmann bestimmt werden.

Die Hydrierung kann in einem geeigneten Lösungsmittel oder in Substanz unverdünnt erfolgen. Geeignete Lösungsmittel sind solche, die unter den Reaktionsbedingungen inert sind, d. h. weder mit dem Edukt oder Produkt reagieren noch selbst verändert werden, und die sich problemlos von den erhaltenen Isoalkanen abtrennen lassen. Zu den geeigneten Lösungsmitteln gehören beispielsweise offenkettige und cyclische Ether, wie Diethylether, Methyl-tert.-butylether, Tetrahydrofuran oder 1,4-Dioxan und Alkohole, insbesondere C₁-C₃-Alkanole, wie Methanol, Ethanol, n-Propanol oder Isopropanol. Geeignet sind auch Gemische der vorstehend genannten Lösungsmittel.

Der für die Hydrierung erforderliche Wasserstoff kann sowohl in Reinform als auch in Form von wasserstoffhaltigen Gasgemischen eingesetzt werden. Letztere dürfen jedoch keine schädlichen Mengen an Katalysatorgiften, wie schwefelhaltige Verbindungen oder CO, enthalten. Beispiele für geeignete wasserstoffhaltige Gasgemische sind solche aus dem Reforming-Verfahren. Vorzugsweise wird jedoch Wasserstoff in Reinform eingesetzt.

Die Hydrierung kann sowohl kontinuierlich als auch diskontinuierlich ausgestaltet sein.

Die Durchführung der Hydrierung erfolgt in der Regel so, dass man die zu hydrierende Verbindung, gegebenenfalls in einem Lösungsmittel, vorlegt. Diese Reaktionslösung wird anschließend vorzugsweise mit dem Hydrierungskatalysator versetzt, bevor dann die Wasserstoffeinleitung erfolgt. In Abhängigkeit vom verwendeten Hydrierungskatalysator erfolgt die Hydrierung bei erhöhter Temperatur und/oder bei erhöhtem Druck. Für die Reaktionsführung unter Druck können die üblichen, aus dem Stand der Technik bekannten Druckgefäße, wie Autoklaven, Rührautoklaven und Druckreaktoren, verwendet werden. Wird nicht bei Wasserstoff-Überdruck gearbeitet, so kommen die üblichen Reaktionsvorrichtungen des Standes der Technik in Betracht, die für Normaldruck geeignet sind. Beispiele hierfür sind übliche Rührkessel, die vorzugsweise mit einer Siedekühlung, geeigneten Mischern, Einleitungsvorrichtungen, gegebenenfalls Wärmetauscherelementen und Inertisierungsvorrichtungen ausgerüstet sind. Bei der kontinuierlichen Reaktionsführung kann die Hydrierung unter Normaldruck in hierfür üblichen Reaktionskesseln, Rohrreaktoren, Festbettreaktoren und dergleichen durchgeführt werden.

Die Erfindung wird anhand der folgenden, nicht einschränkenden Beispiele näher erläutert.

### Beispiele

### Beispiel 1

### Synthese von 6-Chlorodibenzo[d,f][1,3,2]dioxaphosphepin mit Methylimidazolium-Hydrochlorid als Katalysator

In einem 2000 ml Doppelmantelreaktor wurden unter Stickstoff 2,2'-Dihydroxybiphenyl (931,1 g, 5,0 mol) und 1-Methylimidazoliumhydrochlorid (0,9 g, 7,6 mmol) vorgelegt, und nach Aufschmelzen des 2,2'-Dihydroxybiphenyls auf eine Innentemperatur von 142 °C erwärmt. Dann wurde unter Rühren der Zulauf des Phosphortrichlorid (861,2 g, 6,26 mol) gestartet, wobei darauf geachtet wurde, dass das Phosphortrichlorid nicht an die heiße Reaktorwand gelangt. Die Dosierrate wurde so geregelt, dass der angeschlossene HCl-Waschturm das gebildete HCl vollständig absorbieren konnte. Für die Zugabe des Phosphortrichlorids wurden insgesamt drei Stunden benötigt. Im Anschluss an die Zugabe des Phosphortrichlorids wurde für drei Stunden bei 140 °C nachgerührt und dabei ein dünnflüssiges gelbes Reaktionsgemisch erhalten. Anschließend wurde zur Entfernung des überschüssigen Phosphortrichlorids innerhalb von 40 Minuten der Reaktor auf ein Endvakuum von 16 mbar evakuiert. Die letzten Reste von Phosphortrichlorid wurden durch Rühren im Vakuum bei 140 °C/16 mbar entfernt und das Gemisch anschließend auf 65 °C abgekühlt. Nach Belüften mit Stickstoff wurde Toluol (139,2 g) zugegeben und die so erhaltene 90 gew.-%ige Lösung (1390 g) des Produkts in eine Schraubdeckelflasche abgelassen und unter Argon verschlossen. Nach ³¹P-NMR hatte das Produkt eine Reinheit von 98,7 %.

### Beispiel 2:

### Synthese von 6-Chlordibenzo[d,1][1,3,2]-dioxaphosphepin mit N-Methylpyrrolidon als Katalysator

Ein 600 Liter Kessel mit Schrägblattrührer, Kondensator, Abgasausschleusung über einen Waschturm und einer Vorrichtung zur Vakuumerzeugung wurde unter Stickstoff mit 2,2'-Dihydroxybiphenyl (88,0 kg, 473 mol) und N-Methylpyrrolidon (0,337 kg, 3,4 mol) beschickt. Durch Aufheizen auf 140 °C Innentemperatur wurde das Gemisch aufgeschmolzen und dann unter Rühren Phosphortrichlorid (88,5 kg, 644 mol) im Verlauf von insgesamt sieben Stunden bei 140 °C zudosiert. Die leicht endotherme Reaktion verlief unter starker HCl-Entwicklung und leichtem Rückfluss. Nach vollständiger Zugabe des Phosphortrichlorids wurde für neun Stunden bei 140 °C nachgerührt und dann der Ansatz auf eine Kesselinnentemperatur von 50 °C abgekühlt. Zur Entfernung des überschüssigen Phosphortrichlorids wurde anschließend der Kessel bei 50 °C bis auf einen Enddruck von 20 mbar (Kondensatortemperatur 5 °C) langsam evakuiert. Dabei destillierte überschüssiges Phosphortrichlorid ab. Zur Vervollständigung der Phosphortrichlorid-Abtrennung wurde im Anschluss bis auf 140 °C Innentemperatur aufgeheizt und bei dieser Temperatur und 20 mbar drei Stunden nachgerührt. Danach wurde das erhaltene Produkt auf 90 °C abgekühlt und unmittelbar für die Synthese in Beispiel 3 eingesetzt.

### Beispiel 3:

### 6,6'-[[3,3',5,5'-Tetrakis(1,1-dimethylethyl)-[1,1'-biphenyl]-2,2'-diyl]bis(oxy)]bis-dibenzo [d,f] [1,3,2]-dioxaphosphepin

Zu der gemäß Beispiel 2 erhaltenen Schmelze von 6-Chlorodibenzo[d,f][1,3,2]-dioxaphosphepin (118,4 kg) wurde bei 85 °C innerhalb von 60 Minuten unter Rühren eine Lösung von 3,3',5,5'-Tetra-(1,1-dimethylethyl)-1,1'-biphenyl-2,2'-diol (92,7 kg) in einer Mischung aus 1-Methylimidazol (40,8 kg) und Toluol (313,5 kg) zudosiert. Bei Ende der Zugabe lagen zwei Phasen vor, die bei 80 °C noch eine Stunde nachgerührt wurden. Dann wurde auf 90 °C Innentemperatur aufgeheizt, der Rührer zur Phasentrennung ausgeschaltet und die Phasen bei 90 °C innerhalb von 20 Minuten separieren gelassen. Als untere Phase wurde 1-Methylimidazoliumhydrochlorid (59 kg) erhalten, das sofort auskristallisierte. Ein ³¹P-NMR der im Kessel verbliebenen oberen Phase bestätigte, dass eine Lösung von 6,6'-[[3,3',5,5'-Tetrakis(1,1-dimethylethyl)-[1,1'-biphenyl]-2,2'-diyl]bis(oxy)]bis-dibenzo[d,f][1,3,2]-dioxaphosphepin in Toluol vorlag. Zur Reinigung nach der zuvor beschriebenen Variante 1 wurde der erhaltene Kesselinhalt zum Rückfluss (113 °C) erhitzt und drei Stunden unter Rückfluss gerührt. Anschließend wurde Toluol bei Normaldruck abdestilliert (insgesamt 218 kg, die Kesselinnentemperatur bei Beendigung der Destillation lag bei 124 °C). Dann wurde der Kesselinhalt mit einer Abkühlrate von 15 °C/h auf 70 °C (Rührerdrehzahl: 50 U/Min) und dann weiter mit 10 °C/h auf 20 °C abgekühlt. Anschließend wurde innerhalb von fünf Stunden Methanol (204 kg) bei 20 °C zudosiert und der Ansatz für weitere 30 min bei 20 °C nachgerührt (Rührerdrehzahl 80 U/Min). Der Kesselinhalt (weiße Suspension) wurde dann zu gleichen Teilen auf zwei Edelstahlnutschen abgelassen. Für jede Nutsche wurde dann wie folgt weiter verfahren: Durch Abdrücken mit Stickstoff wurde die Mutterlauge (Toluol/Methanol-Mischung) abfiltriert. Die Filtration verlief sehr zügig. Zum Nachwaschen jeder Nutsche wurde frisches Methanol (je 135 kg) in den Kessel gefüllt und dieser für 10 Minuten bei 18 °C und einer Rührerdrehzahl von188 U/Min gerührt. Das Methanol wurde dann jeweils ohne Aufrühren auf die Nutsche gegeben und wieder durch Abdrücken mit Stickstoff filtriert. Anschließend wurde auf jeder Nutsche der Filterkuchen noch viermal mit Methanol (je 95 kg) gewaschen und anschließend über Nacht mit 2 bar Stickstoff trocken geblasen, bis kein Filtrat mehr erhalten wurde. Anschließend wurde in jeder Nutsche das Produkt bei maximal 50 °C im Verlauf von 61 Stunden weiter mit einem auf 50 °C vorgewärmten Stickstoffstrom auf einen Methanolgehalt unter 0,05 % getrocknet. Das Produkt (insgesamt 134,2 kg, Ausbeute 67,7 %, bezogen auf 2,2'-Dihydroxybiphenyl) wurde als weißer Feststoff erhalten.
Chloridgehalt (bestimmt mittels Ionenchromatographie): 13 mg/kg,
Stickstoffgehalt (bestimmt nach der ASTM D 5762-02): 37 mg/kg.

### Beispiel 4:

### 6,6'-[[3,3',5,5'-Tetrakis(1,1-dimethylethyl)-[1,1'-biphenyl]-2,2'-diyl]bis(oxy)]bis-dibenzo [d,f][1,3,2]-dioxaphosphepin

Ein 2 L Doppelmantelkolben wurde unter inerter Atmosphäre mit 6-Chlordibenzo-[d,f][1,3,2]-dioxaphosphepin (445,6 g als 90%ige Lösung in Toluol, 1,60 mol) beschickt und die Lösung auf 85 °C erwärmt. Weiter wurde ein 2 L Erlenmeyerkolben mit Magnetrührer mit 1-Methylimidazol (141,0 g, 1,60 mol) und Toluol (791,5 g) beschickt und zu der gerührten Mischung 3,3',5,5'-Tetra-(1,1-dimethylethyl)-1,1'-biphenyl-2,2'-diol (320,5 g, 0,78 mol) gegeben, worauf eine nahezu farblose Lösung gebildet wurde. Diese Lösung wurde über einen Tropftrichter innerhalb von 80 Minuten unter inerter Atmosphäre in den Doppelmantelkolben zugetropft. Das gebildete braune Reaktionsgemisch wurde anschließend noch für 50 Minuten bei 80 °C gehalten und dann auf 90 °C erhitzt. Nach weiterem Rühren über 10 Minuten wurde der Rührer angehalten. Es hatten sich zwei Phasen gebildet, die 70 Minuten zum Trennen belassen wurden. Die untere Phase (1-Methylimidazolium-Hydrochlorid) wurde dann durch das Bodenventil als viskose Flüssigkeit abgelassen (182,7 g) und kristallisierte danach schnell aus (Fp. ca. 80 °C). Die obere Phase wurde dann zum Rückfluss gebracht (115 °C) und über weitere drei Stunden gerührt.

In der Zwischenzeit wurde ein 4 L Doppelmantelreaktor mit Rührer unterhalb des 2 L Doppelmantelreaktors angeordnet und vom Bodenablassventil des 2 L Reaktors ein thermisch isolierter Teflonschlauch durch einen Schliff in den 4 L Reaktor geführt. Unter inerter Atmosphäre wurde der 4 L Reaktor mit Methanol (2000 ml) beschickt und dieses auf 20 °C gekühlt. Anschließend wurde die Rührerdrehzahl auf 355 U/Min eingestellt und die Lösung des Liganden in Toluol aus dem 2 L Reaktor innerhalb von 70 Minuten im freien Fall so in das Methanol einlaufen gelassen, dass der aus dem Teflonschlauch austretende Strahl weder mit der Wand noch mit der Achse oder dem Blatt des Rührers in Berührung kam. Das Produkt fiel sofort als weißer Feststoff aus. Nach Ende der Zugabe der Lösung des Liganden wurde die erhaltene Suspension noch eine Stunde nachgerührt. Anschließend wurde das Produkt abfiltriert und der 4 L Reaktor mit Methanol (1000 ml) nachgespült. Der Filterkuchen wurde mit diesem Methanol aufgerührt und abgesaugt und noch dreimal mit Methanol (je 1000 ml) nachgewaschen und dann trockengesaugt. Nach Trocknen des so erhaltenen Produkts über Nacht bei 70 °C und 10 mbar wurden 605,3 g (90,1 %, bezogen auf 6-Chlordibenzo[d,f][1,3,2]-dioxaphosphepin) eines farblosen, frei fließenden Pulvers erhalten.
Chlorid (Ionenchromatographie): < 1 mg/kg, Stickstoff (bestimmt nach ASTM D 5762-02): 2 mg/kg.

Das direkt nach der Filtration erhaltene Produkt war das Toluol-Monosolvat des 6,6'-[[3,3',5,5'-Tetrakis(1,1-dimethylethyl)-[1,1'-biphenyl]-2,2'-diyl]bis(oxy)]bis-dibenzo [d,f] [1,3,2]-dioxaphosphepins. In Abhängigkeit von der Schärfe der Trocknungsbedingungen kann das Toluol-Monosolvat in das Non-Solvat von I umgewandelt werden. Das Toluol-Monosolvat und Mischungen dieser beiden Formen von I in von den Trocknungsbedingungen abhängigen verschiedenen Zusammensetzungen sind frei fließende Pulver, die auch nach längerer Lagerung nicht zum Verbacken neigen.

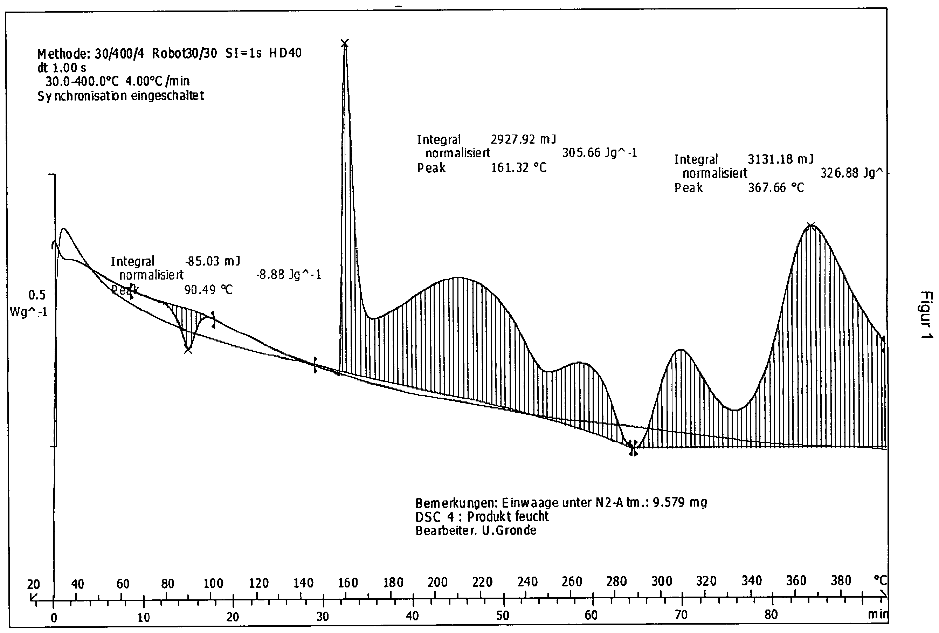

Figur 1 zeigt die Differentialkalorimetrie-Messung (DSC, differential scanning calorimetry) des soweit wie möglich trockengesaugten, in Beispiel 4 erhaltenen, methanolfeuchten Filterkuchens von I. Die DSC-Messung wurde mit einem Mettler Toledo DSC 822e-Modul durchgeführt (Probenmenge: 10 mg, offener Tiegel aus Aluminium, Aufheizrate 10 K/min).

Trotz der beobachteten erstaunlichen Stabilität des 6,6'-[[3,3',5,5'-Tetrakis(1,1-dimethylethyl)-[1,1'-biphenyl]-2,2'-diyl]bis(oxy)]bis-dibenzo [d,f] [1,3,2]-dioxaphosphepins in Methanol zeigte sich, dass der methanolfeuchte Filterkuchen des reinen Produkts beim Trocknen einer nicht zu hohen Temperaturbelastung unterzogen werden kann, da bei einer Onset-Temperatur von 157 °C eine autokatalytische Zersetzung eintritt, bei der ca. 260 J/g Wärme freigesetzt wird. Insgesamt wird durch die exotherme Zersetzung eine Endtemperatur > 400 °C erreicht.

### Beispiel 5:

Stabilisierung des 6,6'-[[3,3',5,5'-Tetrakis(1,1-dimethylethyl)-[1,1'-biphenyl]-2,2'-diyl]bis(oxy)]bis-dibenzo[d,f][1,3,2]-dioxaphosphepin durch Zusatz von Natriummethylat zum Methanol bei der Fällung und Waschung sowie abschließender Wäsche des Filterkuchens mit Aceton.

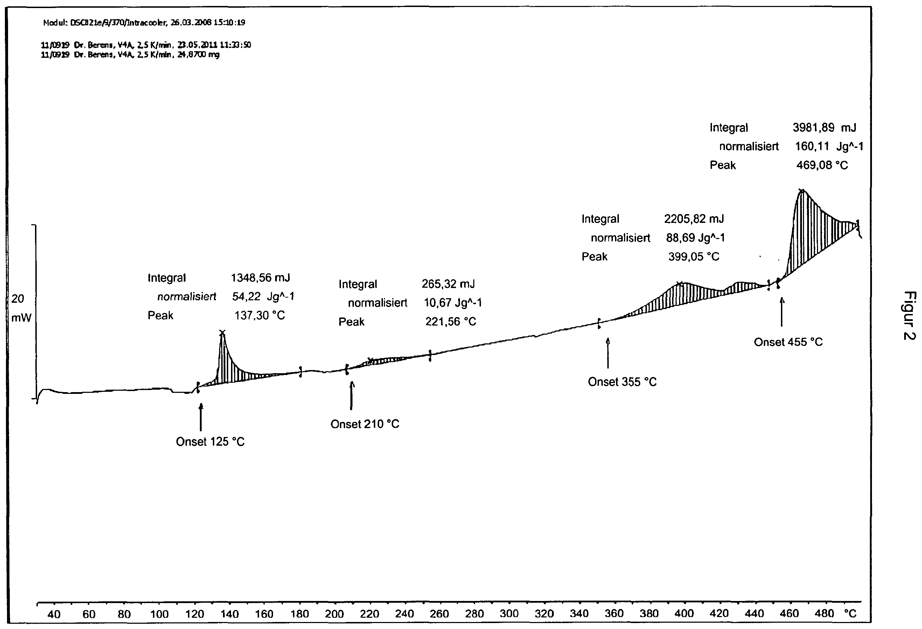

Die Herstellung der Lösung des Liganden in Toluol erfolgte in genau gleicher Weise wie in Beispiel 4 angegeben wird. Die Apparatur für die Fällung von I ist die Gleiche wie in Beispiel 4 angegeben. Zur Durchführung der Fällung wurde im 4 L Reaktor Methanol (2000 ml) vorgelegt und zu diesem noch Natriummethylat (8,0 g einer 30%igen Lösung in Methanol) gegeben. Anschließend wurde die Rührerdrehzahl auf 355 U/Min eingestellt und die Lösung des Liganden in Toluol aus dem 2 L Reaktor innerhalb von 80 Minuten im freien Fall so in das Methanol einlaufen gelassen, dass der aus dem Teflonschlauch austretende Strahl weder mit der Wand noch mit der Achse oder dem Blatt des Rührers in Berührung kam. Das Produkt fiel sofort als weißer Feststoff aus. Nach Ende der Zugabe der Lösung des Liganden wurde die erhaltene Suspension noch für 110 Minuten nachgerührt. Anschließend wurde das Produkt abfiltriert und der 4 L Reaktor mit einem Gemisch aus Methanol (450 g) und Natriummethylat (2,0 g einer 30%igen Lösung in Methanol) nachgespült. Der Filterkuchen wurde mit diesem Methanol aufgerührt und abgesaugt und noch dreimal mit einem Gemisch aus Methanol und Natriummethylat (jeweils 450 g Methanol und 2,0 g einer 30%igen Natriummethylatlösung in Methanol) nachgewaschen und dann trockengesaugt. Vom feuchten Kristallisat aus dem Filterkuchen wurde eine Probe (250 g) für eine DSC und eine Druckwärmestaumessung entnommen. Figur 2 zeigt das DSC.

Anschließend wurde der Filterkuchen über Verdrängungswäsche mit Aceton (500 ml) gewaschen und gut abgesaugt. Nach Trocknen des so erhaltenen Produkts über zwei Tage bei 70 °C und 10 mbar wurden 605,3 g eines farblosen, frei fließenden Pulvers erhalten.

Wird bei der Reinigung und den nachfolgenden Waschschritten dem eingesetzten Methanol Natriummethylat zugesetzt und dann zuletzt eine Acetonwäsche durchgeführt, die das NaOMe-haltige Methanol aus dem Filterkuchen verdrängt, so zeigt sich in der Differentialkalorimetrie zwar immer noch eine leichte Zersetzung ab einer Onset-Temperatur von 125 °C, die aber nicht mehr autokatalytisch verläuft. Durch diese Vorgehensweise wird ein Produkt erhalten, dessen Na-Gehalt sehr klein ist (< 30 ppm) und bei dem die Gefahr einer thermischen Zersetzung praktisch vollständig gebannt ist. Die noch beobachtete Wärmeentwicklung von ca. 54 J/g bewirkt eine Erwärmung von ca. 25 °C, die nicht ausreicht, das Material in einem gefährlichen Temperaturbereich weiter aufzuheizen.

### Beispiel 6:

### Lagerversuche von erfindungsgemäß gereinigtem und konventionell umkristallisiertem 6,6'-[[3,3',5,5'-Tetrakis(1,1-dimethylethyl)-[1,1'-biphenyl]-2,2'-diyl]bis(oxy)]bis-dibenzo [d,f][1,3,2]-dioxaphosphepin

Als erfindungsgemäßes Produkt wird das Produkt aus Beispiel 4 eingesetzt.

Das erfindungsgemäß gereinigte Produkt aus Beispiel 4 wird einem Lagerversuch unter erschwerten Lagerbedingungen mit den folgenden Parametern unterzogen:
- hohe relative Luftfeuchte: 95 %
- hohe Temperatur: 40 °C
- wasserdampfdurchlässige Verpackung: Mini-Bigbags aus PP-Gewebe mit PE-Inliner (Materialstärke 125 µm), Abmessungen: 350 x 350 x 500 mm, Volumen ca. 60 Liter
- hohe Belastung (wie drei Mini-Bigbags übereinander): 6,0 kPa Die Versuche werden über zwei und vier Wochen durchgeführt.

Das Produkt wird dazu in den zuvor beschriebenen Mini-Bigbags verpackt und bei den angegebenen Bedingungen im Klimaschrank mit der entsprechenden Last durch Gewichte belastet. Nach der angegebenen Zeitdauer werden die Mini-Bigbags ausgelagert und aufgeschnitten. Auf der Oberfläche werden Eindringtests mit einem Penetrometer (PCE Inst. Deutschland GmbH) durchgeführt, um die Eindringkraft zu ermitteln.
a) Lagerdauer zwei Wochen:
   - an der Oberfläche leichte Schollenbildung
   - im Kern einzelne Klumpen, Rest des Produktes ist sehr gut rieselfähig
   - Klumpen zerfallen schon bei sehr geringem mechanischen Aufwand
   - Ergebnisse Penetrometertest: (Mittelwerte aus zwei Proben unterschiedlicher Eindringtiefe mit je fünf Messungen) 6 mm: 0,01 N, 12 mm: 0,3 N
b) Lagerdauer vier Wochen:
   - Produkt ist locker und frei rieselfähig
   - keine Verbackungen
   - keine bis wenige Klumpen mit sehr geringer Festigkeit
   - am Beutelrand und vor allem in den Ecken leichte Verfestigung
   - Ergebnisse Penetrometertest: (Mittelwerte aus zwei Proben mit je fünf Messungen) 6 mm: 0,0 N, 12 mm: 0,1 N

Das aus Methanol gefällte erfindungsgemäße Produkt nach Beispiel 4 ist auch nach vier Wochen rieselfähig und in keiner Weise verbacken. Die höchsten Eindringkräfte wurden nach zwei Wochen gemessen mit einem Wert von 0,3 N.

## Patentansprüche

1. Verfahren zur Reinigung von organischen Diphosphiten der allgemeinen Formel (I) 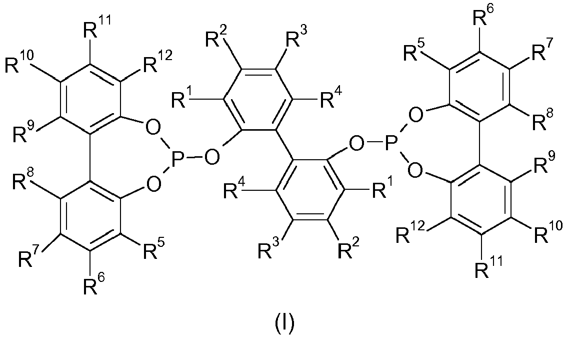 worin
R¹, R², R³ und R⁴ unabhängig voneinander für Wasserstoff, unsubstituiertes geradkettiges oder verzweigtes C₁-C₆-Alkyl, unsubstituiertes geradkettiges oder verzweigtes C₁-C₆-Alkoxy, C₆-C₁₀-Aryl, Chlor, Formyl, Acyl oder (C₁-C₆-Alkoxy)carbonyl stehen,
wobei zwei benachbarte Reste R¹ bis R⁴ gemeinsam mit den Kohlenstoffatomen des Benzolkerns, an die sie gebunden sind, auch für ein kondensiertes Ringsystem mit einem weiteren Benzolring stehen können,
R⁵, R⁶, R⁷, R⁸, R⁹, R¹⁰, R¹¹ und R¹² unabhängig voneinander Wasserstoff, unsubstituiertes geradkettiges oder verzweigtes C₁-C₆-Alkyl, unsubstituiertes geradkettiges oder verzweigtes C₁-C₆-Alkoxy, C₆-C₁₀-Aryl, Chlor, Formyl, Acyl oder (C₁-C₆-Alkoxy)carbonyl stehen,
wobei zwei benachbarte Reste R⁵ bis R¹² gemeinsam mit den Kohlenstoffatomen des Benzolkerns, an die sie gebunden sind, auch für ein kondensiertes Ringsystem mit einem weiteren Benzolring stehen können,
bei dem man ein rohes organisches Diphosphit der allgemeinen Formel (I), das zumindest teilweise in einem ersten Lösungsmittel (L1) gelöst ist, das ausgewählt ist unter (C₁-C₄-Alkyl)benzolen, durch Versetzen mit einem zweiten Lösungsmittel (L2), das ausgewählt ist unter Methanol, Ethanol, Ethylenglycoldimethylether und Mischungen davon, ausfällt.

2. Verfahren nach Anspruch 1, bei dem man das ausgefällte organische Diphosphit von der flüssigen Phase abtrennt und das abgetrennte organische Diphosphit einer Wäsche mit einem flüssigen Waschmedium unterzieht.

3. Verfahren nach Anspruch 1 oder 2, bei dem man
a) eine Lösung bereitstellt, die das rohe organische Diphosphit der allgemeinen Formel (I) und das erste Lösungsmittel (L1) enthält,
b1) das organische Diphosphit durch Abdestillieren eines Teils des ersten Lösungsmittels (L1) teilweise auskristallisiert und zur Vervollständigung der Kristallisation das zweite Lösungsmittel (L2) zugibt, und
c) das auskristallisierte organische Diphosphit von der flüssigen Phase abtrennt.

4. Verfahren nach Anspruch 1 oder 2, bei dem man
a) eine Lösung bereitstellt, die das rohe organische Diphosphit der allgemeinen Formel (I) und das erste Lösungsmittel (L1) enthält,
b2) die in Schritt a) bereitgestellte Lösung zu dem zweiten Lösungsmittel (L2) zugibt, wobei das organische Diphosphit zumindest teilweise ausfällt, und
c) das ausgefällte organische Diphosphit von der flüssigen Phase abtrennt.

5. Verfahren nach einem der vorhergehenden Ansprüche, wobei das erste Lösungsmittel (L1) ausgewählt ist unter Toluol, Ethylbenzol, o-, m- oder p-Xylol, Cumol und Mischungen davon.

6. Verfahren nach einem der vorhergehenden Ansprüche, wobei als erstes Lösungsmittel (L1) Toluol eingesetzt wird.

7. Verfahren nach einem der vorhergehenden Ansprüche, wobei als zweites Lösungsmittel (L2) Methanol eingesetzt wird.

8. Verfahren nach einem der vorhergehenden Ansprüche, wobei in den Verbindungen der allgemeinen Formel (I) die Gruppe 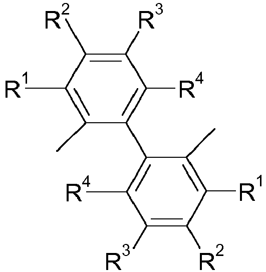 ausgewählt ist unter 3,3',5,5'-Tetramethyl-1,1'-biphenyl-2,2'-diyl, 3,3',5,5'-Tetraethyl-1,1'-biphenyl-2,2'-diyl, 3,3',5,5'-Tetra-n-propyl-1,1'-biphenyl-2,2'-diyl, 3,3'-Dimethyl-5,5'-dichlor-1,1'-biphenyl-2,2'-diyl, 3,3'-Diethyl-5,5'-dibrom-1,1-biphenyl-2,2'-diyl, 3,3'-Dimethyl-5,5'-diethyl-1,1'-biphenyl-2,2'-diyl, 3,3'-Dimethyl-5,5'-di-n-propyl-1,1'-biphenyl-2,2'-diyl, 3,3',5,5'-Tetra-isopropyl-1,1'-biphenyl-2,2'-diyl, 3,3',5,5'-Tetra-n-butyl-1,1'-biphenyl-2,2'-diyl, 3,3',5,5'-Tetra-isobutyl-1,1'-biphenyl-2,2'-diyl, 3,3',5,5'-Tetra-sec-butyl-1,1'-biphenyl-2,2'-diyl, 3,3',5,5'-Tetra-(1,1-dimethylethyl)-1,1'-biphenyl-2,2'-diyl, 3,3'-Di-(1,1-dimethylethyl)-5,5'-di-n-amyl-1,1'-biphenyl-2,2'-diyl, 3,3',5,5'-Tetrakis(1,1-dimethylpropyl)-1,1'-biphenyl-2,2'-diyl, 3,3'-Di-(1,1-dimethylethyl)-5,5'-bis(1,1-dimethylpropyl)-1,1'-biphenyl-2,2'-diyl, 3,3'-Di-(1,1-dimethylethyl)-5,5'-di-n-hexyl-1,1'-biphenyl-2,2'-diyl, 3,3'-Di-(1,1-dimethylethyl)-5,5'-di-2-hexyl-1,1'-biphenyl-2,2'-diyl, 3,3'-Di-(1,1-dimethylethyl)-5,5'-di-3-hexyl-1,1'-biphenyl-2,2'-diyl, 3,3'-Di-(1,1-dimethylethyl)-5,5'-di-n-heptyl-1,1'-biphenyl-2,2'-diyl, 3,3'-Di-(1,1-dimethylethyl)-5,5'-di-2-heptyl-1,1'-biphenyl-2,2'-diyl, 3,3'-Di-(1,1-dimethylethyl)-5,5'-di-3-heptyl-1,1'-biphenyl-2,2'-diyl, 3,3'-Di-(1,1-dimethylethyl)-5,5'-di-4-heptyl-1,1'-biphenyl-2,2'-diyl, 3,3'-Di-(1,1-dimethylethyl)-5,5'-di-n-octyl-1,1'-biphenyl-2,2'-diyl, 3,3'-Di-(1,1-dimethylethyl)-5,5'-di-2-octyl-1,1'-biphenyl-2,2'-diyl, 5,5'-Di-3-octyl-1,1'-biphenyl-2,2'-diyl, 3,3'-Di-(1,1-dimethylethyl)-5,5'-di-4-octyl-1,1'-biphenyl-2,2'-diyl, 3,3'-Di-(1,1-dimethylethyl)-5,5'-bis(1,1,3,3-tetramethylbutyl)-1,1'-biphenyl-2,2'-diyl, 3,3',5,5'-Tetrakis(1,1,3,3-tetramethylbutyl)-1,1'-biphenyl-2,2'-diyl, 3,3'-di-(1,1-dimethylethyl)-5,5',6,6'-Tetramethyl-1,1'-biphenyl-2,2'-diyl, 3,3'-Di-(1,1-dimethylethyl)-5,5'-diphenyl-1,1'-biphenyl-2,2'-diyl, 3,3'-Di-(1,1-dimethylethyl)-5,5'-bis(2,4,6,-trimethylphenyl)-1,1'-biphenyl-2,2'-diyl, 3,3'-Di-(1,1-dimethylethyl)-5,5'-dimethoxy-1,1'-biphenyl-2,2'-diyl, 3,3'-Di-(1,1-dimethylethyl)-5,5'-diethoxy-1,1'-biphenyl-2,2'-diyl, 3,3'-Di-(1,1-dimethylethyl)-5,5'-di-n-propoxy-1,1'-biphenyl-2,2'-diyl, 3,3'-Di-(1,1-dimethylethyl)-5,5'-di-isopropoxy-1,1'-biphenyl-2,2'-diyl, 3,3'-Di-(1,1-dimethylethyl)-5,5'-di-n-butoxy-1,1'-biphenyl-2,2'-diyl, 3,3'-Di-(1,1-dimethylethyl)-5,5'-di-sec-butoxy-1,1'-biphenyl-2,2'-diyl, 3,3'-Di-(1,1-dimethylethyl)-5,5'-di-iso-butoxy-1,1'-biphenyl-2,2'-diyl, 3,3'-Di-(1,1-dimethylethyl)-5,5'-di-tert-butoxy-1,1'-biphenyl-2,2'-diyl und 1,1'-Binaphthalinyl-2,2'-diyl.

9. Verfahren nach einem der vorhergehenden Ansprüche, wobei in den Verbindungen der allgemeinen Formel (I) die Gruppen 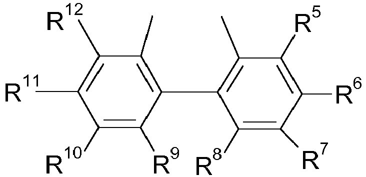 unabhängig voneinander ausgewählt sind unter 1,1'-Biphenyl-2,2'-diyl, 5,5'-Dimethyl-1,1'-biphenyl-2,2'-diyl, 5,5'-Dichlor-1,1'-biphenyl-2,2'-diyl, 5,5'-Dibrom-1,1'-biphenyl-2,2'-diyl, 5,5'-Diethyl-1,1'-biphenyl-2,2'-diyl, 5,5'-Di-n-propyl-1,1'-biphenyl-2,2'-diyl, 5,5'-Di-isopropyl-1,1'-biphenyl-2,2'-diyl, 5,5'-Di-n-butyl-1,1'-biphenyl-2,2'-diyl, 5,5'-Di-sec-butyl-1,1'-biphenyl-2,2'-diyl, 5,5'-Di-iso-butyl-1,1'-biphenyl-2,2'-diyl, 5,5'-Di-(1,1-dimethylethyl)-1,1'-biphenyl-2,2'-diyl, 5,5'-Di-n-amyl-1,1'-biphenyl-2,2'-diyl, 5,5'-bis(1,1-dimethylpropyl)-1,1'-biphenyl-2,2'-diyl, 5,5'-Bis(1,1-dimethylpropyl)-1,1'-biphenyl-2,2'-diyl, 5,5'-Di-n-hexyl-1,1'-biphenyl-2,2'-diyl, 5,5'-Di-2-hexyl-1,1'-biphenyl-2,2'-diyl, 5,5'-Di-3-hexyl-1,1'-biphenyl-2,2'-diyl, 5,5'-Di-n-heptyl-1,1'-biphenyl-2,2'-diyl, 5,5'-Di-2-heptyl-1,1'-biphenyl-2,2'-diyl, 5,5'-Di-3-heptyl-1,1'-biphenyl-2,2'-diyl, 5,5'-Di-4-heptyl-1,1'-biphenyl-2,2'-diyl, 5,5'-Di-n-octyl-1,1'-biphenyl-2,2'-diyl, 5,5'-Di-2-octyl-1,1'-biphenyl-2,2'-diyl, 5,5'-Di-3-octyl-1,1'-biphenyl-2,2'-diyl, 5,5'-Di-4-octyl-1,1'-biphenyl-2,2'-diyl, 5,5'-Bis(1,1,3,3-tetramethylbutyl)-1,1'-biphenyl-2,2'-diyl, 5,5',6,6'-Tetramethyl-1,1'-biphenyl-2,2'-diyl, 5,5'-Diphenyl-1,1'-biphenyl-2,2'-diyl, 5,5'-Bis(2,4,6,-trimethylphenyl)-1,1'-biphenyl-2,2'-diyl, 5,5'-Dimethoxy-1,1'-biphenyl-2,2'-diyl, 5,5'-Diethoxy-1,1'-biphenyl-2,2'-diyl, 5,5'-Di-n-propoxy-1,1'-biphenyl-2,2'-diyl, 5,5'-Di-isopropoxy-1,1'-biphenyl-2,2'-diyl, 5,5'-Di-n-butoxy-1,1'-biphenyl-2,2'-diyl, 5,5'-Di-sec-butoxy-1,1'-biphenyl-2,2'-diyl, 5,5'-Di-iso-butoxy-1,1'-biphenyl-2,2'-diyl, 5,5'-Di-tert-butoxy-1,1'-biphenyl-2,2'-diyl und 1,1'-Binaphthalinyl-2,2'-diyl.

10. Verfahren nach einem der vorhergehenden Ansprüche, wobei die Verbindung der Formel (I) 6,6'-[[3,3',5,5'-Tetrakis(1,1-dimethylethyl)-[1,1'-biphenyl]-2,2'-diyl]bis(oxy)]bis-dibenzo[d,f][1,3,2]-dioxaphosphepin ist.

11. Verfahren nach einem der vorhergehenden Ansprüche, bei dem man zur Herstellung des organischen Diphosphits (I) 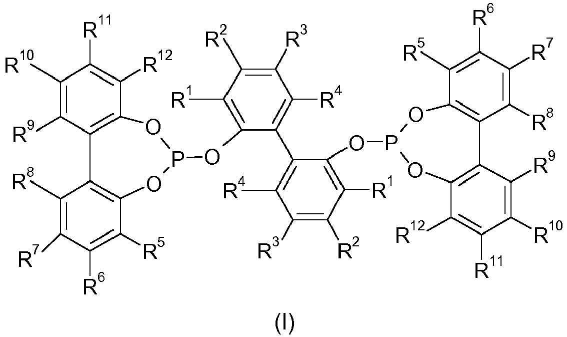 worin
R¹, R², R³ und R⁴ wie in einem der Ansprüche 1, 9 oder 10 definiert sind und R⁵, R⁶, R⁷, R⁸, R⁹, R¹⁰, R¹¹ und R¹², wie in einem der Ansprüche 1, 11 oder 12 definiert sind,
i) ein Diol der allgemeinen Formel (Ai) 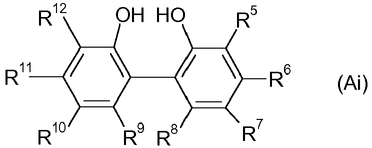 mit PCl₃ unter Erhalt einer Verbindung (A1) umsetzt 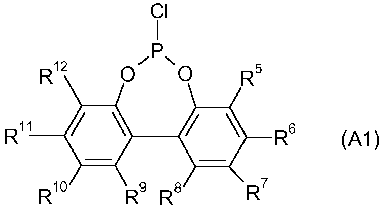
ii) wenigstens eine Verbindung (A1) mit einem Diol der allgemeinen Formel (Aii) 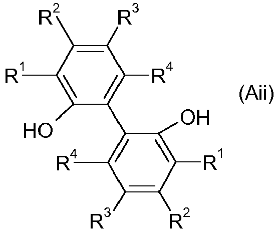 unter Erhalt eines organischen Diphosphits (I) umsetzt.

12. Verfahren nach einem der Ansprüche 4 bis 11, wobei in Schritt b2) das zweite Lösungsmittel (L2) vorlegt und die in Schritt a) bereitgestellte Lösung des organischen Diphosphits als Zuführstrom in den Raum über dem vorgelegten Lösungsmittel (L2) eingespeist wird.

13. Verfahren nach einem der Ansprüche 2 bis 12, wobei als Waschmedium das zur Fällung eingesetzte zweite Lösungsmittel (L2), insbesondere Methanol, eingesetzt wird.

14. Verfahren nach einem der Ansprüche 2 bis 13, wobei das organische Diphosphit zunächst einer ein- oder mehrfachen Wäsche mit Methanol und abschließend einer Wäsche mit Aceton unterzogen wird.

15. Verfahren nach einem der Ansprüche 2 bis 14, wobei man dem Waschmedium, oder bei mehreren Waschschritten wenigstens einem der Waschmedien, eine Base zugibt, die vorzugsweise ausgewählt ist unter Alkalimetallhydroxiden und Alkalimetallalkoholaten.

## Claims

1. A method of purifying organic diphosphites of the general formula (I) 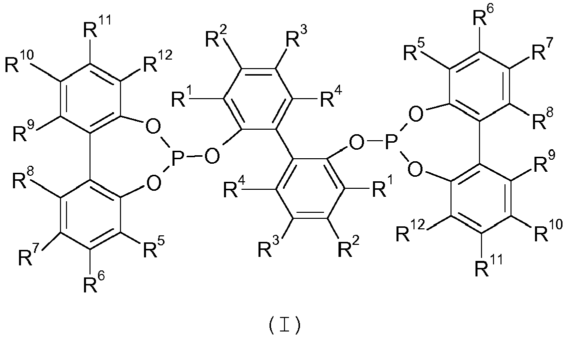 where
R¹, R², R³ and R⁴ are each, independently of one another, hydrogen, unsubstituted straight-chain or branched C₁-C₆-alkyl, unsubstituted straight-chain or branched C₁-C₆-alkoxy, C₆-C₁₀-aryl, chlorine, formyl, acyl or (C₁-C₆-alkoxy)carbonyl,
where two adjacent radicals R¹ to R⁴ together with the carbon atoms of the benzene ring to which they are bound can also form a fused ring system with a further benzene ring,
R⁵, R⁶, R⁷, R⁸, R⁹, R¹⁰, R¹¹ and R¹² are each, independently of one another, hydrogen, unsubstituted straight-chain or branched C₁-C₆-alkyl, unsubstituted straight-chain or branched C₁-C₆-alkoxy, C₆-C₁₀-aryl, chlorine, formyl, acyl or (C₁-C₆-alkoxy) carbonyl,
where two adjacent radicals R⁵ to R¹² together with the carbon atoms of the benzene ring to which they are bound can also form a fused ring system with a further benzene ring,
wherein a crude organic diphosphite of the general formula (I) which is at least partly dissolved in a first solvent (L1) selected from among (C₁-C₄-alkyl)benzenes is precipitated by admixing with a second solvent (L2) selected from among methanol, ethanol, ethyleneglycol dimethyl ether and mixtures thereof.

2. The method according to claim 1, wherein the precipitated organic diphosphite is separated off from the liquid phase and the organic diphosphite which has been separated off is subjected to washing with a liquid washing medium.

3. The method according to claim 1 or 2, wherein
a) a solution comprising the crude organic diphosphite of the general formula (I) and the first solvent (L1) is provided,
b1) the organic diphosphite is partly crystallized out by distilling off part of the first solvent (L1) and, to complete the crystallization, the second solvent (L2) is added and
c) the crystallized organic disphosphite is separated off from the liquid phase.

4. The method according to claim 1 or 2, wherein
a) a solution comprising the crude organic diphosphite of the general formula (I) and the first solvent (L1) is provided,
b2) the solution provided in step a) is added to the second solvent (L2), with the organic diphosphite at least partly precipitating, and
c) the precipitated organic diphosphite is separated off from the liquid phase.

5. The method according to any of the preceding claims, wherein the first solvent (L1) is selected from among toluene, ethylbenzene, o-, m- or p-xylene, cumene, chlorobenzene and mixtures thereof.

6. The method according to any of the preceding claims, wherein toluene is used as first solvent (L1) .

7. The method according to any of the preceding claims, wherein methanol is used as second solvent (L2) .

8. The method according to any of the preceding claims, wherein the group 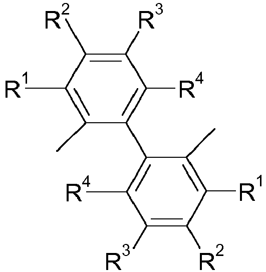 in the compounds of the general formula (I) is selected from among 3,3',5,5'-tetramethyl-1,1'-biphenyl-2,2'-diyl, 3,3',5,5'-tetraethyl-1,1'-biphenyl-2,2'-diyl, 3,3',5,5'-tetra-n-propyl-1,1'-biphenyl-2,2'-diyl, 3,3'-dimethyl-5,5'-dichloro-1,1'-biphenyl-2,2'-diyl, 3,3'-diethyl-5,5'-dibromo-1,1'-biphenyl-2,2'-diyl, 3,3'-dimethyl-5,5'-diethyl-1,1'-biphenyl-2,2'-diyl, 3,3'-dimethyl-5,5'-di-n-propyl-1,1'-biphenyl-2,2'-diyl, 3,3',5,5'-tetraisopropyl-1,1'-biphenyl-2,2'-diyl, 3,3',5,5'-tetra-n-butyl-1,1'-biphenyl-2,2'-diyl, 3,3',5,5'-tetraisobutyl-1,1'-biphenyl-2,2'-diyl, 3,3',5,5'-tetra-sec-butyl-1,1'-biphenyl-2,2'-diyl, 3,3',5,5'-tetra(1,1-dimethylethyl)-1,1'-biphenyl-2,2'-diyl, 3,3'-di(1,1-dimethylethyl)-5,5'-di-n-amyl-1,1'-biphenyl-2,2'-diyl, 3,3',5,5'-tetrakis(1,1-dimethylpropyl)-1,1'-biphenyl-2,2'-diyl, 3,3'-di(1,1-dimethylethyl)-5,5'-bis(1,1-dimethylpropyl)-1,1'-biphenyl-2,2'-diyl, 3,3'-di(1,1-dimethylethyl)-5,5'-di-n-hexyl-1,1'-biphenyl-2,2'-diyl, 3,3'-di(1,1-dimethylethyl)-5,5'-di-2-hexyl-1,1'-biphenyl-2,2'-diyl, 3,3'-di(1,1-dimethylethyl)-5,5'-di-3-hexyl-1,1'-biphenyl-2,2'-diyl, 3,3'-di(1,1-dimethylethyl)-5,5'-di-n-heptyl-1,1'-biphenyl-2,2'-diyl, 3,3'-di(1,1-dimethylethyl)-5,5'-di-2-heptyl-1,1'-biphenyl-2,2'-diyl, 3,3'-di(1,1-dimethylethyl)-5,5'-di-3-heptyl-1,1'-biphenyl-2,2'-diyl, 3,3'-di(1,1-dimethylethyl)-5,5'-di-4-heptyl-1,1'-biphenyl-2,2'-diyl, 3,3'-di(1,1-dimethylethyl)-5,5'-di-n-octyl-1,1'-biphenyl-2,2'-diyl, 3,3'-di(1,1-dimethylethyl)-5,5'-di-2-octyl-1,1'-biphenyl-2,2'-diyl, 5,5'-di-3-octyl-1,1'-biphenyl-2,2'-diyl, 3,3'-di(1,1-dimethylethyl)-5,5'-di-4-octyl-1,1'-biphenyl-2,2'-diyl, 3,3'-di(1,1-dimethylethyl)-5,5'-bis(1,1,3,3-tetramethylbutyl)-1,1'-biphenyl-2,2'-diyl, 3,3',5,5'-tetrakis(1,1,3,3-tetramethylbutyl)-1,1'-biphenyl-2,2'-diyl, 3,3'-di(1,1-dimethylethyl)-5,5',6,6'-tetramethyl-1,1'-biphenyl-2,2'-diyl, 3,3'-di(1,1-dimethylethyl)-5,5'-diphenyl-1,1'-biphenyl-2,2'-diyl, 3,3'-di(1,1-dimethylethyl)-5,5'-bis(2,4,6,-trimethylphenyl)-1,1'-biphenyl-2,2'-diyl, 3,3'-di(1,1-dimethylethyl)-5,5'-dimethoxy-1,1'-biphenyl-2,2'-diyl, 3,3'-di(1,1-dimethylethyl)-5,5'-diethoxy-1,1'-biphenyl-2,2'-diyl, 3,3'-di(1,1-dimethylethyl)-5,5'-di-n-propoxy-1,1'-biphenyl-2,2'-diyl, 3,3'-di(1,1-dimethylethyl)-5,5'-diisopropoxy-1,1'-biphenyl-2,2'-diyl, 3,3'-di(1,1-dimethylethyl)-5,5'-di-n-butoxy-1,1'-biphenyl-2,2'-diyl, 3,3'-di(1,1-dimethylethyl)-5,5'-di-sec-butoxy-1,1'-biphenyl-2,2'-diyl, 3,3'-di(1,1-dimethylethyl)-5,5'-diisobutoxy-1,1'-biphenyl-2,2'-diyl, 3,3'-di(1,1-dimethylethyl)-5,5'-di-tert-butoxy-1,1'-biphenyl-2,2'-diyl and 1,1'-binaphthalenyl-2,2'-diyl.

9. The method according to any of the preceding claims, wherein the groups 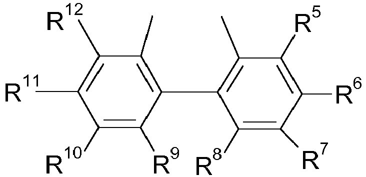 in the compounds of the general formula (I) are selected independently from among 1,1'-biphenyl-2,2'-diyl, 5,5'-dimethyl-1,1'-biphenyl-2,2'-diyl, 5,5'-dichloro-1,1'-biphenyl-2,2'-diyl, 5,5'-dibromo-1,1'-biphenyl-2,2'-diyl, 5,5'-diethyl-1,1'-biphenyl-2,2'-diyl, 5,5'-di-n-propyl-1,1'-biphenyl-2,2'-diyl, 5,5'-diisopropyl-1,1'-biphenyl-2,2'-diyl, 5,5'-di-n-butyl-1,1'-biphenyl-2,2'-diyl, 5,5'-di-sec-butyl-1,1'-biphenyl-2,2'-diyl, 5,5'-diisobutyl-1,1'-biphenyl-2,2'-diyl, 5,5'-di(1,1-dimethylethyl)-1,1'-biphenyl-2,2'-diyl, 5,5'-di-n-amyl-1,1'-biphenyl-2,2'-diyl, 5,5'-bis(1,1-dimethylpropyl)-1,1'-biphenyl-2,2'-diyl, 5,5'-bis(1,1-dimethylpropyl)-1,1'-biphenyl-2,2'-diyl, 5,5'-di-n-hexyl-1,1'-biphenyl-2,2'-diyl, 5,5'-di-2-hexyl-1,1'-biphenyl-2,2'-diyl, 5,5'-di-3-hexyl-1,1'-biphenyl-2,2'-diyl, 5,5'-di-n-heptyl-1,1'-biphenyl-2,2'-diyl, 5,5'-di-2-heptyl-1,1'-biphenyl-2,2'-diyl, 5,5'-di-3-heptyl-1,1'-biphenyl-2,2'-diyl, 5,5'-di-4-heptyl-1,1'-biphenyl-2,2'-diyl, 5,5'-di-n-octyl-1,1'-biphenyl-2,2'-diyl, 5,5'-di-2-octyl-1,1'-biphenyl-2,2'-diyl, 5,5'-di-3-octyl-1,1'-biphenyl-2,2'-diyl, 5,5'-di-4-octyl-1,1'-biphenyl-2,2'-diyl, 5,5'-bis(1,1,3,3-tetramethylbutyl)-1,1'-biphenyl-2,2'-diyl, 5,5',6,6'-tetramethyl-1,1'-biphenyl-2,2'-diyl, 5,5'-diphenyl-1,1'-biphenyl-2,2'-diyl, 5,5'-bis(2,4,6,-trimethylphenyl)-1,1'-biphenyl-2,2'-diyl, 5,5'-dimethoxy-1,1'-biphenyl-2,2'-diyl, 5,5'-diethoxy-1,1'-biphenyl-2,2'-diyl, 5,5'-di-n-propoxy-1,1'-biphenyl-2,2'-diyl, 5,5'-diisopropoxy-1,1'-biphenyl-2,2'-diyl, 5,5'-di-n-butoxy-1,1'-biphenyl-2,2'-diyl, 5,5'-di-sec-butoxy-1,1'-biphenyl-2,2'-diyl, 5,5'-diisobutoxy-1,1'-biphenyl-2,2'-diyl, 5,5'-di-tert-butoxy-1,1'-biphenyl-2,2'-diyl and 1,1'-binaphthalenyl-2,2'-diyl.

10. The method according to any of the preceding claims, wherein the compound of the formula (I) is 6,6'-[[3,3',5,5'-tetrakis(1,1-dimethylethyl)-1,1'-biphenyl]-2,2'-diyl]bis(oxy)]bisdibenzo[d,f][1,3,2]-dioxaphosphepin.

11. The method according to any of the preceding claims, wherein the organic diphosphite (I) 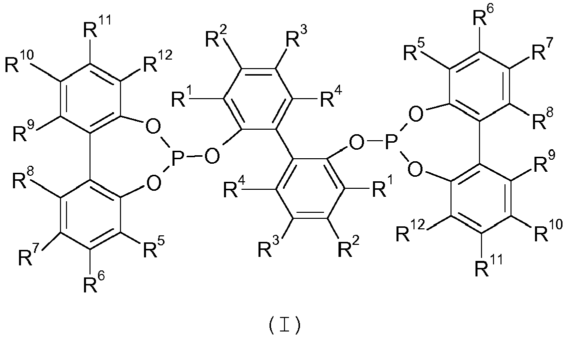 where
R¹, R², R³ and R⁴ are as defined in any of claims 1, 9 and 10 and R⁵, R⁶, R⁷, R⁸, R⁹, R¹⁰, R¹¹ and R¹² are as defined in any of claims 1, 11 and 12,
is prepared by
i) reacting a diol of the general formula (Ai) 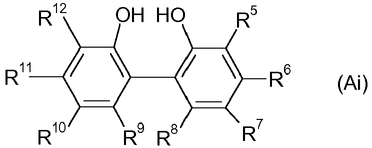 with PCl₃ to give a compound (A1) 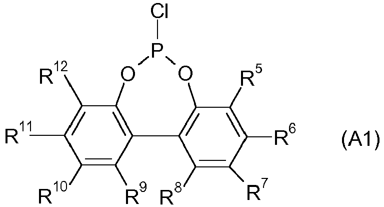
ii) reacting at least one compound (A1) with a diol of the general formula (Aii) 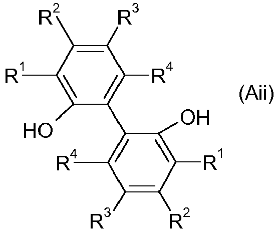 to give an organic diphosphite (I).

12. The method according to any of claims 4 to 11, wherein, in step b2) the second solvent (L2) is placed and the solution of the organic diphosphite provided in step a) is fed as feed stream into the space above the initially charged solvent (L2).

13. The method according to any of claims 2 to 12, wherein the second solvent (L2), in particular methanol, used for the precipitation is used as washing medium.

14. The method according to any of claims 2 to 13, wherein the organic diphosphite is subjected firstly to single or multiple washing with methanol and finally to washing with acetone.

15. The method according to any of claims 2 to 14, wherein a base which is preferably selected from among alkali metal hydroxides and alkali metal alkoxides is added to the washing medium or in the case of a plurality of washing steps to at least one of the washing media.

## Revendications

1. Procédé de purification de diphosphites organiques de formule générale (I) 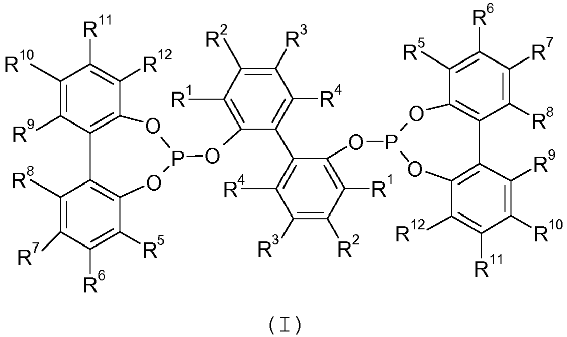 où
R¹, R², R³ et R⁴ sont chacun, indépendamment les uns des autres, hydrogène, alkyle en C₁-C₆ à chaîne linéaire ou ramifié non substitué, alcoxy en C₁-C₆ à chaîne linéaire ou ramifié non substitué, aryle en C₆-C₁₀, chlore, formyle, acyle ou (alcoxy en C₁-C₆)carbonyle,
où deux radicaux adjacents R¹ à R⁴, conjointement avec les atomes de carbone du cycle benzénique auquel ils sont liés, peuvent également former un système cyclique condensé avec un autre cycle benzénique,
R⁵, R⁶, R⁷, R⁸, R⁹, R¹⁰, R¹¹ et R¹² sont chacun, indépendamment les uns des autres, hydrogène, alkyle en C₁-C₆ à chaîne linéaire ou ramifié non substitué, alcoxy en C₁-C₆ à chaîne linéaire ou ramifié non substitué, aryle en C₆-C₁₀, chlore, formyle, acyle ou (alcoxy en C₁-C₆)carbonyle, où deux radicaux adjacents R⁵ à R¹², conjointement avec les atomes de carbone du cycle benzénique auquel ils sont liés, peuvent également former un système cyclique condensé avec un autre cycle benzénique,
dans lequel un diphosphite organique brut de formule générale (I) qui est au moins partiellement dissous dans un premier solvant (L1) choisi parmi des (alkyle en C₁-C₄)benzènes est précipité par mélange avec un deuxième solvant (L2) choisi parmi le méthanol, l'éthanol, l'éther diméthylique d'éthylèneglycol et des mélanges de ceux-ci.

2. Procédé selon la revendication 1, dans lequel le diphosphite organique précipité est séparé de la phase liquide et le diphosphite organique qui a été séparé est soumis à un lavage avec un milieu de lavage liquide.

3. Procédé selon la revendication 1 ou 2, dans lequel
a) une solution comprenant le diphosphite organique brut de formule générale (I) et le premier solvant (L1) est fournie,
b1) le diphosphite organique est partiellement cristallisé par distillation d'une partie du premier solvant (L1) et, pour terminer la cristallisation, le deuxième solvant (L2) est ajouté et
c) le diphosphite organique cristallisé est séparé de la phase liquide.

4. Procédé selon la revendication 1 ou 2, dans lequel
a) une solution comprenant le diphosphite organique brut de formule générale (I) et le premier solvant (L1) est fournie,
b2) la solution fournie dans l'étape a) est ajoutée au deuxième solvant (L2), avec le diphosphite organique au moins partiellement précipité, et
c) le diphosphite organique précipité est séparé de la phase liquide.

5. Procédé selon l'une quelconque des revendications précédentes, dans lequel le premier solvant (L1) est choisi parmi le toluène, l'éthylbenzène, le o-, m- ou p-xylène, le cumène, le chlorobenzène et des mélanges de ceux-ci.

6. Procédé selon l'une quelconque des revendications précédentes, dans lequel le toluène est utilisé en tant que premier solvant (L1).

7. Procédé selon l'une quelconque des revendications précédentes, dans lequel le méthanol est utilisé en tant que deuxième solvant (L2).

8. Procédé selon l'une quelconque des revendications précédentes, dans lequel, dans les composés de formule générale (I), le groupe 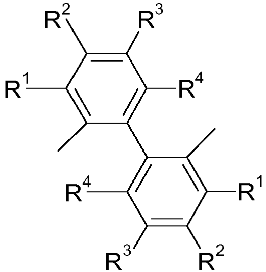 est choisi parmi 3,3',5,5'-tétraméthyl-1,1'-biphényl-2,2'-diyle, 3,3',5,5'-tétraéthyl-1,1'-biphényl-2,2'-diyle, 3,3',5,5'-tétra-n-propyl-1,1'-biphényl-2,2'-diyle, 3,3'-diméthyl-5,5'-dichloro-1,1'-biphényl-2,2'-diyle, 3,3'-diéthyl-5,5'-dibromo-1,1'-biphényl-2,2'-diyle, 3,3'-diméthyl-5,5'-diéthyl-1,1'-biphényl-2,2'-diyle, 3,3'-diméthyl-5,5'-di-n-propyl-1,1'-biphényl-2,2'-diyle, 3,3',5,5'-tétraisopropyl-1,1'-biphényl-2,2'-diyle, 3,3',5,5'-tétra-n-butyl-1,1'-biphényl-2,2'-diyle, 3,3',5,5'-tétraisobutyl-1,1'-biphényl-2,2'-diyle, 3,3',5,5'-tétra-sec-butyl-1,1'-biphényl-2,2'-diyle, 3,3',5,5'-tétra(1,1-diméthyléthyl)-1,1'-biphényl-2,2'-diyle, 3,3'-di(1,1-diméthyléthyl)-5,5'-di-n-amyl-1,1'-biphényl-2,2'-diyle, 3,3',5,5'-tétrakis(1,1-diméthylpropyl)-1,1'-biphényl-2,2'-diyle, 3,3'-di(1,1-diméthyléthyl)-5,5'-bis(1,1-diméthylpropyl)-1,1'-biphényl-2,2'-diyle, 3,3'-di(1,1-diméthyléthyl)-5,5'-di-n-hexyl-1,1'-biphényl-2,2'-diyle, 3,3'-di(1,1-diméthyléthyl)-5,5'-di-2-hexyl-1,1'-biphényl-2,2'-diyle, 3,3'-di(1,1-diméthyléthyl)-5,5'-di-3-hexyl-1,1'-biphényl-2,2'-diyle, 3,3'-di(1,1-diméthyléthyl)-5,5'-di-n-heptyl-1,1'-biphényl-2,2'-diyle, 3,3'-di(1,1-diméthyléthyl)-5,5'-di-2-heptyl-1,1'-biphényl-2,2'-diyle, 3,3'-di(1,1-diméthyléthyl)-5,5'-di-3-heptyl-1,1'-biphényl-2,2'-diyle, 3,3'-di(1,1-diméthyléthyl)-5,5'-di-4-heptyl-1,1'-biphényl-2,2'-diyle, 3,3'-di(1,1-diméthyléthyl)-5,5'-di-n-octyl-1,1'-biphényl-2,2'-diyle, 3,3'-di(1,1-diméthyléthyl)-5,5'-di-2-octyl-1,1'-biphényl-2,2'-diyle, 5,5'-di-3-octyl-1,1'-biphényl-2,2'-diyle, 3,3'-di(1,1-diméthyléthyl)-5,5'-di-4-octyl-1,1'-biphényl-2,2'-diyle, 3,3'-di(1,1-diméthyléthyl)-5,5'-bis(1,1,3,3-tétraméthylbutyl)-1,1'-biphényl-2,2'-diyle, 3,3',5,5'-tétrakis(1,1,3,3-tétraméthylbutyl)-1,1'-biphényl-2,2'-diyle, 3,3'-di(1,1-diméthyléthyl)-5,5',6,6'-tétraméthyl-1,1'-biphényl-2,2'-diyle, 3,3'-di(1,1-diméthyléthyl)-5,5'-diphényl-1,1'-biphényl-2,2'-diyle, 3,3'-di(1,1-diméthyléthyl)-5,5'-bis(2,4,6,-triméthylphényl)-1,1'-biphényl-2,2'-diyle, 3,3'-di(1,1-diméthyléthyl)-5,5'-diméthoxy-1,1'-biphényl-2,2'-diyle, 3,3'-di(1,1-diméthyléthyl)-5,5'-diéthoxy-1,1'-biphényl-2,2'-diyle, 3,3'-di(1,1-diméthyléthyl)-5,5'-di-n-propoxy-1,1'-biphényl-2,2'-diyle, 3,3'-di(1,1-diméthyléthyl)-5,5'-diisopropoxy-1,1'-biphényl-2,2'-diyle, 3,3'-di(1,1-diméthyléthyl)-5,5'-di-n-butoxy-1,1'-biphényl-2,2'-diyle, 3,3'-di(1,1-diméthyléthyl)-5,5'-di-sec-butoxy-1,1'-biphényl-2,2'-diyle, 3,3'-di(1,1-diméthyléthyl)-5,5'-diisobutoxy-1,1'-biphényl-2,2'-diyle, 3,3'-di(1,1-diméthyléthyl)-5,5'-di-tert-butoxy-1,1'-biphényl-2,2'-diyle et 1,1'-binaphtalényl-2,2'-diyle.

9. Procédé selon l'une quelconque des revendications précédentes, dans lequel, dans les composés de formule générale (I), les groupes 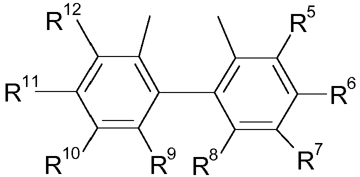 sont indépendamment choisis parmi 1,1'-biphényl-2,2'-diyle, 5,5'-diméthyl-1,1'-biphényl-2,2'-diyle, 5,5'-dichloro-1,1'-biphényl-2,2'-diyle, 5,5'-dibromo-1,1'-biphényl-2,2'-diyle, 5,5'-diéthyl-1,1'-biphényl-2,2'-diyle, 5,5'-di-n-propyl-1,1'-biphényl-2,2'-diyle, 5,5'-diisopropyl-1,1'-biphényl-2,2'-diyle, 5,5'-di-n-butyl-1,1'-biphényl-2,2'-diyle, 5,5'-di-sec-butyl-1,1'-biphényl-2,2'-diyle, 5,5'-diisobutyl-1,1'-biphényl-2,2'-diyle, 5,5'-di(1,1-diméthyléthyl)-1,1'-biphényl-2,2'-diyle, 5,5'-di-n-amyl-1,1'-biphényl-2,2'-diyle, 5,5'-bis(1,1-diméthylpropyl)-1,1'-biphényl-2,2'-diyle, 5,5'-bis(1,1-diméthylpropyl)-1,1'-biphényl-2,2'-diyle, 5,5'-di-n-hexyl-1,1'-biphényl-2,2'-diyle, 5,5'-di-2-hexyl-1,1'-biphényl-2,2'-diyle, 5,5'-di-3-hexyl-1,1'-biphényl-2,2'-diyle, 5,5'-di-n-heptyl-1,1'-biphényl-2,2'-diyle, 5,5'-di-2-heptyl-1,1'-biphényl-2,2'-diyle, 5,5'-di-3-heptyl-1,1'-biphényl-2,2'-diyle, 5,5'-di-4-heptyl-1,1'-biphényl-2,2'-diyle, 5,5'-di-n-octyl-1,1'-biphényl-2,2'-diyle, 5,5'-di-2-octyl-1,1'-biphényl-2,2'-diyle, 5,5'-di-3-octyl-1,1'-biphényl-2,2'-diyle, 5,5'-di-4-octyl-1,1'-biphényl-2,2'-diyle, 5,5'-bis(1,1,3,3-tétraméthylbutyl)-1,1'-biphényl-2,2'-diyle, 5,5',6,6'-tétraméthyl-1,1'-biphényl-2,2'-diyle, 5,5'-diphényl-1,1'-biphényl-2,2'-diyle, 5,5'-bis(2,4,6,-triméthylphényl)-1,1'-biphényl-2,2'-diyle, 5,5'-diméthoxy-1,1'-biphényl-2,2'-diyle, 5,5'-diéthoxy-1,1'-biphényl-2,2'-diyle, 5,5'-di-n-propoxy-1,1'-biphényl-2,2'-diyle, 5,5'-diisopropoxy-1,1'-biphényl-2,2'-diyle, 5,5'-di-n-butoxy-1,1'-biphényl-2,2'-diyle, 5,5'-di-sec-butoxy-1,1'-biphényl-2,2'-diyle, 5,5'-diisobutoxy-1,1'-biphényl-2,2'-diyle, 5,5'-di-tert-butoxy-1,1'-biphényl-2,2'-diyle et 1,1'-binaphtalényl-2,2'-diyle.

10. Procédé selon l'une quelconque des revendications précédentes, dans lequel le composé de formule (I) est la 6,6'-[[3,3',5,5'-tétrakis (1,1-diméthyléthyl)-1,1'-biphényl]-2,2'-diyl]bis(oxy)]bisdibenzo[d,f][1,3,2]-dioxaphosphépine.

11. Procédé selon l'une quelconque des revendications précédentes, dans lequel le diphosphite organique (I) 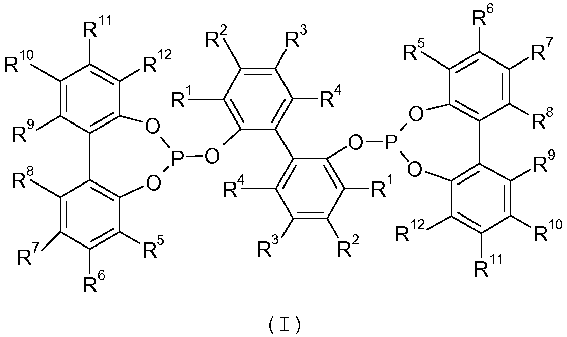 où
R¹, R², R³ et R⁴ sont tels que définis dans l'une quelconque des revendications 1, 9 et 10 et R⁵, R⁶, R⁷, R⁸, R⁹, R¹⁰, R¹¹ et R¹² sont tels que définis dans l'une quelconque des revendications 1, 11 et 12,
est préparé par
i) réaction d'un diol de formule générale (Ai) 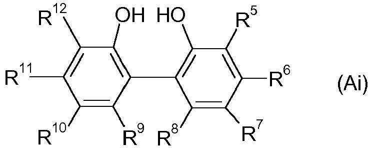 avec PCl₃ pour obtenir un composé (A1) 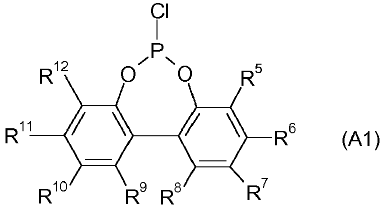
ii) réaction d'au moins un composé (A1) avec un diol de formule générale (Aii) 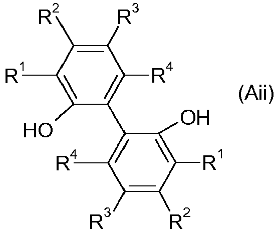 pour obtenir un diphosphite organique (I).

12. Procédé selon l'une quelconque des revendications 4 à 11, dans lequel, dans l'étape b2), le deuxième solvant (L2) est placé et la solution du diphosphite organique fournie dans l'étape a) est alimentée en tant que flux d'alimentation dans l'espace au-dessus du solvant initialement chargé (L2) .

13. Procédé selon l'une quelconque des revendications 2 à 12, dans lequel le deuxième solvant (L2), en particulier le méthanol, utilisé pour la précipitation est utilisé en tant que milieu de lavage.

14. Procédé selon l'une quelconque des revendications 2 à 13, dans lequel le diphosphite organique est soumis dans un premier temps à un lavage unique ou multiple avec du méthanol et finalement à un lavage avec de l'acétone.

15. Procédé selon l'une quelconque des revendications 2 à 14, dans lequel une base qui est de préférence choisie parmi des hydroxydes de métal alcalin et des alcoxydes de métal alcalin est ajoutée au milieu de lavage ou, dans le cas d'une pluralité d'étapes de lavage, à au moins un des milieux de lavage.
